(19) Europäisches Patentamt

European Patent Office

Office européen des brevets

(11) **EP 4 484 894 A1**

(12) # EUROPEAN PATENT APPLICATION
published in accordance with Art. 153(4) EPC

(43) Date of publication:
**01.01.2025 Bulletin 2025/01**

(21) Application number: **23773782.0**

(22) Date of filing: **20.03.2023**

(51) International Patent Classification (IPC):
**G01C 21/34** (2006.01)    **G01C 21/00** (2006.01)
**B60W 30/06** (2006.01)    **B60W 30/08** (2012.01)
**B60W 30/095** (2012.01)    **B60W 50/00** (2006.01)
**B60W 50/14** (2020.01)

(52) Cooperative Patent Classification (CPC):
**B60W 30/06; B60W 30/08; B60W 30/095;
B60W 50/00; B60W 50/14; G01C 21/00;
G01C 21/34**

(86) International application number:
**PCT/CN2023/082475**

(87) International publication number:
**WO 2023/179534 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 CN 202210302356**

(71) Applicant: **Huawei Technologies Co., Ltd.
Shenzhen, Guangdong 518129 (CN)**

(72) Inventors:
• **ZHOU, Lei
Shenzhen, Guangdong 518129 (CN)**

• **LI, Jiang
Shenzhen, Guangdong 518129 (CN)**
• **FANG, Yuedong
Shenzhen, Guangdong 518129 (CN)**
• **ZHANG, Neng
Shenzhen, Guangdong 518129 (CN)**
• **CAI, Jia
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PARKING PATH PLANNING METHOD, DISPLAY METHOD AND ELECTRONIC DEVICE**

(57)    Embodiments of this application provide a parking path planning method, a display method, and an electronic device. The display method includes: displaying a parking interface, where the parking interface includes a virtual vehicle and a virtual parking space, the virtual vehicle indicates a target vehicle, and the virtual parking space indicates an actual parking space available for parking the target vehicle; and then displaying a virtual parking path and a virtual passable area on the parking interface in response to an indication indicating that the virtual parking space is selected, where the virtual parking path indicates an actual parking path between the target vehicle and the actual parking space, the virtual vehicle is located in the virtual passable area, the virtual passable area indicates an actual passable area, and a vehicle body of the target vehicle is located in the actual passable area. In this way, in a process in which a user controls parking of the target vehicle, the user can be prompted to prevent collision between the vehicle body (including a vehicle front and a vehicle rear) of the target vehicle and an obstacle, to improve safety of parking.

**(Cont. next page)**

Virtual passable area

Virtual parking path

B

G

A

C

D

Parking interface

FIG. 2b

**Description**

This application claims priority to Chinese Patent Application No. 202210302356.5, filed with the China National Intellectual Property Administration on March 25, 2022 and entitled "PARKING PATH PLANNING METHOD, DISPLAY METHOD, AND ELECTRONIC DEVICE", which is incorporated herein by reference in its entirety.

**TECHNICAL FIELD**

Embodiments of this application relate to the field of vehicle technologies, and in particular, to a parking path planning method, a display method, a system, and an electronic device.

**BACKGROUND**

A semi-automatic parking system can perform lateral control on a vehicle (to be specific, control lateral movement of the vehicle, for example, control steering of a steering wheel of the vehicle), so that a driver can drive the vehicle into a parking space by performing only longitudinal control on the vehicle (to be specific, controlling forward and backward movement of the vehicle, for example, switching a gear to control the vehicle to move forward or backward, or stepping on an accelerator or a brake for acceleration or deceleration), without controlling the steering wheel.

Currently, many semi-automatic parking systems provide staged parking assistance. During current-stage parking assistance, when a driver fails to control a vehicle to reach a location specified by the parking system, the driver needs to manually adjust the vehicle to reach the location specified by the parking system, so that the parking system can be triggered to perform next-stage parking assistance. It can be learned that the existing parking system has small tolerance to a control deviation of the driver, and cannot guide the driver for quick parking.

**SUMMARY**

To resolve the foregoing technical problems, this application provides a parking path planning method, a display method, and an electronic device. In the method, tolerance to a control deviation of a driver is high, and the driver can be guided to quickly park a vehicle.

According to a first aspect, an embodiment of this application provides a display method. The method may include: first, displaying a parking interface, where the parking interface includes a virtual vehicle and a virtual parking space, the virtual vehicle indicates a target vehicle, and the virtual parking space indicates an actual parking space available for parking the target vehicle; and then displaying a virtual parking path and a virtual passable area on the parking interface in response to an indication indicating that the virtual parking space is selected, where the virtual parking path indicates an actual parking path between the target vehicle and the actual parking space, the virtual vehicle is located in the virtual passable area, the virtual passable area indicates an actual passable area, and a vehicle body of the target vehicle is located in the actual passable area. In this way, in a process in which a user controls parking of the target vehicle, the user can be prompted to prevent collision between the vehicle body (including a vehicle front and a vehicle rear) of the target vehicle and an obstacle, to improve safety of parking.

For example, the parking interface may further display other UI (User Interface, user interface) elements such as a virtual obstacle (indicating an actual obstacle (for example, a wall, a pillar, a pedestrian, or an animal in a parking lot) near the target vehicle) and a parking space number of the actual parking space. This is not limited in this application.

For example, the actual passable area may be an area in which the vehicle body of the target vehicle does not collide with an obstacle. To be specific, when the vehicle body of the target vehicle is located in the actual passable area, the vehicle body of the target vehicle does not collide with the obstacle.

For example, the virtual passable area may be displayed in a plurality of forms. For example, a contour line of the virtual passable area may be displayed in an eye-catching color (for example, yellow, green, or red). For another example, a contour line of the virtual passable area is displayed in bold. For still another example, the entire virtual passable area is displayed in an eye-catching color. For yet another example, the virtual passable area is displayed with a contour line and text such as "Passable area". This is not limited in this application.

According to the first aspect, the method further includes: displaying, on the parking interface, parking action prompt information corresponding to the actual parking path, where the parking action prompt information includes at least one of the following: gear prompt information, steering-wheel turning prompt information, and speed prompt information. In this way, guidance can be provided for the user to control the vehicle laterally and/or control the vehicle longitudinally, to reduce difficulty of parking, improve parking efficiency, and further improve user experience.

For example, the gear prompt information is used to indicate the user to control a gear of the target vehicle, the steering-wheel turning prompt information is used to indicate the user to control a steering wheel of the target vehicle, and the speed prompt information is used to indicate the user to control a speed of the target vehicle.

According to any one of the first aspect or the foregoing implementations of the first aspect, the gear prompt information includes a gear icon, the steering-wheel turning prompt information includes a steering wheel icon, and the speed prompt information includes speed prompt text.

According to any one of the first aspect or the foregoing implementations of the first aspect, the steering-wheel turning prompt information includes a target turning angle and a turning angle progress indication icon, where the progress indication icon indicates a numerical relationship between a current turning angle of the steering wheel and a target turning angle. The turning angle progress indication icon may indicate a relationship between an angle by which the user has turned the steering wheel and the target turning angle. In this way, in a process in which the user turns the steering wheel, the user can be notified of whether a turning angle has reached the target turning angle, so that the user can be better instructed to control a direction of the target vehicle, to increase a parking speed and further improve user experience.

For example, the gear prompt information, the steering-wheel turning prompt information, and the speed prompt information may alternatively include other information. This is not limited in this application.

For example, the gear prompt information, a turning direction, the target turning angle, and a turning angle progress indication in the steering-wheel turning prompt information, and the speed prompt information may alternatively be played through voice. This is not limited in this application.

According to any one of the first aspect or the foregoing implementations of the first aspect, the method further includes: displaying success prompt information on the parking interface in response to an indication indicating that a parking action is successfully performed, where the success prompt information indicates that the parking action is successfully performed. In this way, the user can be notified that the parking action has been successfully performed.

According to any one of the first aspect or the foregoing implementations of the first aspect, the virtual passable area is a 2D area or a 3D area.

For example, UI elements, such as the virtual parking space, the virtual vehicle, and the virtual parking path, on the parking interface may all be 2D UI elements or 3D UI elements. Details are not described herein.

According to any one of the first aspect or the foregoing implementations of the first aspect, the method further includes: displaying a virtual assistance path in response to a path deviation indication, where the path deviation indication indicates that the target vehicle has deviated from the actual parking path, and the virtual assistance path indicates an actual assistance path for the target vehicle to return to the actual parking path. In this way, the user can return to the actual parking path based on the actual assistance path, and then continue to park the vehicle based on the actual parking path. This improves tolerance to a control deviation of a driver, can guide the driver for quick parking, and improves user experience. Particularly, this can help the user avoid an obstacle in front of the vehicle front, to avoid friction or collision.

According to any one of the first aspect or the foregoing implementations of the first aspect, the virtual parking path is located in the virtual passable area; and when the target vehicle is on the actual parking path, the vehicle body of the virtual vehicle is located in the virtual passable area.

According to a second aspect, an embodiment of this application provides a parking path planning method. The method includes: first, planning a first parking path for a target vehicle based on a location of a target parking space; and then planning an assistance path based on a current location of the target vehicle and the first parking path when a distance by which the target vehicle deviates from the first parking path is greater than a first threshold during movement of the target vehicle based on the first parking path, where the assistance path is used to indicate the target vehicle to return to the first parking path. In this way, in a process in which a user controls the target vehicle to move based on the first parking path, after the target vehicle deviates from the first parking path due to a deviation of a user operation, the target vehicle can return to the parking path based on the assistance path, and then continue to park the vehicle based on the parking path. This improves tolerance to a control deviation of a driver, can guide the driver for quick parking, and improves user experience.

According to the second aspect, the planning an assistance path based on a current location of the target vehicle and the first parking path includes: selecting a target sampling point from a plurality of sampling points obtained by sampling the first parking path; and performing path planning by using the current location of the target vehicle as a start point and the target sampling point as an end point, to obtain the assistance path.

According to any one of the second aspect or the foregoing implementations of the second aspect, the selecting a target sampling point from a plurality of sampling points obtained by sampling the first parking path includes: determining a first candidate sampling point from the plurality of sampling points, where the first candidate sampling point is a sampling point, on the first parking path, at which a status of the target vehicle is switched; and selecting the target sampling point from the first candidate sampling point. In this way, the target sampling point can be quickly selected, to improve efficiency of planning the assistance path.

According to any one of the second aspect or the foregoing implementations of the second aspect, the selecting a target sampling point from a plurality of sampling points obtained by sampling the first parking path includes: inputting the current location of the target vehicle and the plurality of sampling points to a trained heuristic model, to obtain path costs separately corresponding to the plurality of sampling points output by the heuristic model, where a path cost corresponding to a first sampling point of the plurality of sampling points is a sum of a path cost corresponding to a path from the current location to the first sampling point and a path cost corresponding to a path from the first sampling point to a last path point on the first parking path, and a path point is a point generated during planning of the first parking path; selecting m first candidate sampling points from the plurality of sampling points, and selecting k second candidate sampling points corresponding to smallest path costs from a plurality of sampling points other than the m first candidate sampling points, where the first candidate sampling point is a point at which a status of the target vehicle is switched; determining, according to a path planning algorithm, path costs corresponding to the m first candidate sampling points and path costs corresponding to the k second candidate sampling points; and selecting, from the m first candidate sampling points and the k second candidate sampling points, a sampling point corresponding to a smallest path cost as the target sampling point. In this way, the target sampling point with the smallest path cost can be selected, so that a path cost of returning from the assistance path to the first parking path and continuing to park the vehicle based on the first parking path is the smallest, and a parking speed can be increased. In addition, a path cost corresponding to each sampling point can be quickly determined by using the trained heuristic model, and then the target sampling point is quickly selected. This improves efficiency of path planning.

For example, the selecting a target sampling point from a plurality of sampling points obtained by sampling the first parking path includes: for a third candidate sampling point of the plurality of sampling points, performing path planning by using the current location of the target vehicle as a start point and the third candidate sampling point as an end point, to obtain a first candidate parking path corresponding to the third candidate sampling point; determining, based on the first candidate parking path corresponding to the third candidate sampling point and a path from the third candidate sampling point to a last path point on the first parking path, a second candidate parking path corresponding to the third candidate sampling point; and selecting, from a plurality of third candidate sampling points, a third candidate sampling point corresponding to a second candidate parking path with a smallest path cost as the target sampling point.

According to any one of the second aspect or the foregoing implementations of the second aspect, the planning a first parking path for a target vehicle based on a location of a target parking space includes: obtaining historical parking data of a user, where the historical parking data includes a historical parking trajectory, a historical parking action, a historical parking space type, and a historical parking environment; and planning the first parking path for the target vehicle based on the historical parking data and the location of the target parking space. In this way, the planned first parking path can better meet a parking habit of the user, and user experience is improved.

According to any one of the second aspect or the foregoing implementations of the second aspect, the method further includes: simulating a movement area formed by movement of the target vehicle along the first parking path; and extending a contour of the movement area outward to obtain an actual passable area for the target vehicle. In this way, when the target vehicle moves along the first parking path, it can be ensured that the vehicle body of the target vehicle does not collide with an obstacle, to improve safety of parking.

According to any one of the second aspect or the foregoing implementations of the second aspect, the planning an assistance path based on a current location of the target vehicle and the first parking path when a distance by which the target vehicle deviates from the first parking path is greater than a first threshold during movement of the target vehicle based on the first parking path includes: planning the assistance path based on the current location of the target vehicle and the first parking path when the distance by which the target vehicle deviates from the first parking path is greater than the first threshold and less than a second threshold during movement of the target vehicle based on the first parking path, where the second threshold is greater than the first threshold; and the method further includes: performing path re-planning based on the location of the target parking space and the current location of the target vehicle when the distance by which the target vehicle deviates from the first parking path is greater than the second threshold during movement of the target vehicle based on the first parking path, to obtain a second parking path. In this way, when the target vehicle slightly deviates from the first parking path, the assistance path is planned, so that the user controls the target vehicle to return to the first parking path based on the assistance path and continues to park the vehicle; or when the target vehicle slightly deviates from the first parking path, a new parking path is re-planned, to reduce a path cost, increase a parking speed, and improve user experience.

According to a third aspect, this application provides an electronic device. The electronic device is configured to perform display, and may include a display module. The display module is configured to: display a parking interface, where the parking interface includes a virtual vehicle and a virtual parking space, the virtual vehicle indicates a target vehicle, and the virtual parking space indicates an actual parking space available for parking the target vehicle; and display a virtual parking path and a virtual passable area on the parking interface in response to an indication indicating that the virtual parking space is selected, where the virtual parking path indicates an actual parking path between the target vehicle and the actual parking space, the virtual vehicle is located in the virtual passable area, the virtual passable area indicates an actual passable area, and a vehicle body of the target vehicle is located in the actual passable area.

In a possible implementation of the third aspect, the electronic device may further include a processing module, configured to process data to obtain data that can be displayed by the display module.

In a possible implementation of the third aspect, the electronic device further includes a communication module, configured to communicate with another device (for example, a server or another vehicle).

The third aspect and any implementation of the third aspect respectively correspond to the first aspect and any implementation of the first aspect. For technical effect corresponding to the third aspect and any implementation of the third aspect, refer to technical effect corresponding to the first aspect and any implementation of the first aspect. Details are not described herein again.

According to a fourth aspect, this application provides an electronic device. The electronic device is configured to perform parking path planning, and the electronic device includes: a parking path planning module, configured to plan a first parking path for a target vehicle based on a location of a target parking space; and an assistance path planning module, configured to plan an assistance path based on a current location of the target vehicle and the first parking path when a distance by which the target vehicle deviates from the first parking path is greater than a first threshold during movement of the target vehicle based on the first parking path, where the assistance path is used to indicate the target vehicle to return to the first parking path.

The fourth aspect and any implementation of the fourth aspect respectively correspond to the second aspect and any implementation of the second aspect. For technical effect corresponding to the fourth aspect and any implementation of the fourth aspect, refer to technical effect corresponding to the second aspect and any implementation of the second aspect. Details are not described herein again.

According to a fifth aspect, an embodiment of this application provides an electronic device, including a memory and a processor. The memory is coupled to the processor. The memory stores program instructions. When the program instructions are executed by the processor, the electronic device is enabled to perform the display method according to any one of the first aspect or the possible implementations of the first aspect.

The fifth aspect and any implementation of the fifth aspect respectively correspond to the first aspect and any implementation of the first aspect. For technical effect corresponding to the fifth aspect and any implementation of the fifth aspect, refer to technical effect corresponding to the first aspect and any implementation of the first aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the parking path planning method according to any one of the second aspect or the possible implementations of the second aspect.

The sixth aspect and any implementation of the sixth aspect respectively correspond to the second aspect and any implementation of the second aspect. For technical effect corresponding to the sixth aspect and any implementation of the sixth aspect, refer to technical effect corresponding to the second aspect and any implementation of the second aspect. Details are not described herein again.

According to a seventh aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device is enabled to perform the display method according to any one of the first aspect or the possible implementations of the first aspect.

The seventh aspect and any implementation of the seventh aspect respectively correspond to the first aspect and any implementation of the first aspect. For technical effect corresponding to the seventh aspect and any implementation of the seventh aspect, refer to technical effect corresponding to the first aspect and any implementation of the first aspect. Details are not described herein again.

According to an eighth aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device is enabled to perform the parking path planning method according to any one of the second aspect or the possible implementations of the second aspect.

The eighth aspect and any implementation of the eighth aspect respectively correspond to the second aspect and any implementation of the second aspect. For technical effect corresponding to the eighth aspect and any implementation of the eighth aspect, refer to technical effect corresponding to the second aspect and any implementation of the second aspect. Details are not described herein again.

According to a ninth aspect, an embodiment of this application provides a computer-readable storage medium. The computer-readable storage medium stores a computer program. When the computer program is run on a computer or a processor, the computer or the processor is enabled to perform the display method according to any one of the first aspect or the possible implementations of the first aspect.

The ninth aspect and any implementation of the ninth aspect respectively correspond to the first aspect and any implementation of the first aspect. For technical effect corresponding to the ninth aspect and any implementation of the ninth aspect, refer to technical effect corresponding to the first aspect and any implementation of the first aspect. Details are not described herein again.

According to a tenth aspect, an embodiment of this application provides a computer-readable storage medium. The computer-readable storage medium stores a computer program. When the computer program is run on a computer or a processor, the computer or the processor is enabled to perform the parking path planning method according to any one of the second aspect or the possible implementations of the second aspect.

The tenth aspect and any implementation of the tenth aspect respectively correspond to the second aspect and any implementation of the second aspect. For technical effect corresponding to the tenth aspect and any implementation of the tenth aspect, refer to technical effect corresponding to the second aspect and any implementation of the second aspect. Details are not described herein again.

According to an eleventh aspect, an embodiment of this application provides a computer program product. The computer program product includes a software program. When the software program is executed by a computer or a processor, the computer or the processor is enabled to perform the display method according to any one of the first aspect or the possible implementations of the first aspect.

The eleventh aspect and any implementation of the eleventh aspect respectively correspond to the first aspect and any implementation of the first aspect. For technical effect corresponding to the eleventh aspect and any implementation of the eleventh aspect, refer to technical effect corresponding to the first aspect and any implementation of the first aspect. Details are not described herein again.

According to a twelfth aspect, an embodiment of this application provides a computer program product. The computer program product includes a software program. When the software program is executed by a computer or a processor, the computer or the processor is enabled to perform the parking path planning method according to any one of the second aspect or the possible implementations of the second aspect.

The twelfth aspect and any implementation of the twelfth aspect respectively correspond to the second aspect and any implementation of the second aspect. For technical effect corresponding to the twelfth aspect and any implementation of the twelfth aspect, refer to technical effect corresponding to the second aspect and any implementation of the second aspect. Details are not described herein again.

**BRIEF DESCRIPTION OF DRAWINGS**

FIG. 1 is a diagram of an example application scenario;
FIG. 2a is a diagram of an example parking interface;
FIG. 2b is a diagram of an example parking interface;
FIG. 2c is a diagram of an example parking interface;
FIG. 2d is a diagram of an example parking interface;
FIG. 2e is a diagram of an example parking interface;
FIG. 3a is a diagram of an example path planning process;
FIG. 3b is a diagram of an example parking space;
FIG. 3c is a diagram of an example parking path;
FIG. 3d is a diagram of an example distance;
FIG. 3e is a diagram of an example assistance path;
FIG. 4a is a diagram of an example movement area;
FIG. 4b is a diagram of an example passable area;
FIG. 4c is a diagram of an example passable area;
FIG. 5 is a diagram of an example electronic device;
FIG. 6 is a diagram of an example electronic device; and
FIG. 7 is a diagram of an example structure of an apparatus.

**DESCRIPTION OF EMBODIMENTS**

The following clearly and completely describes technical solutions in embodiments of this application with reference to accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may indicate the following three cases: Only A exists, both A and B exist, and only B exists.

In this specification and the claims of embodiments of this application, the terms "first", "second", and the like are intended to distinguish between different objects, but not to indicate a specific order of the objects. For example, a first target object and a second target object are intended to distinguish between different target objects, but not to indicate a specific order of the target objects.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner.

In descriptions of embodiments of this application, "a plurality of" means two or more, unless otherwise specified. For example, a plurality of processing units are two or more processing units, and a plurality of systems are two or more systems.

This application may be used in various parking scenarios, for example, a scenario of parking in a parking lot, a scenario of parking in a specified area on the roadside, and a scenario of parking in a home garage. A scenario in which a target vehicle is parked in a parking lot is used below as an example for description.

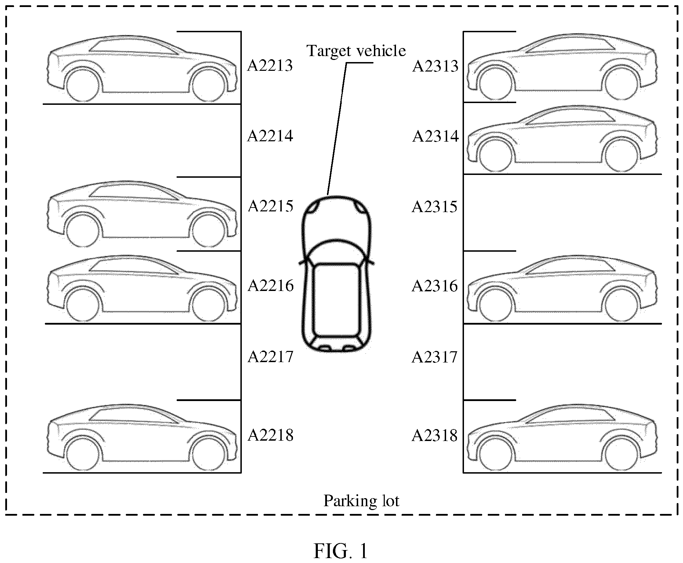

FIG. 1 is a diagram of an example scenario. In the embodiment of FIG. 1, a scenario in which a target vehicle enters a parking lot for parking is described.

As shown in FIG. 1, for example, the parking lot includes a plurality of parking spaces. Some parking spaces are occupied. For example, A2213, A2215, A2216, A2218, A2313, A2314, A2316, and A2318 are occupied. Some parking spaces are not occupied (in other words, the parking spaces are empty). For example, A2214, A2217, A2315, and A2317 are not occupied. After a user drives the target vehicle into the parking lot, the user may park the target vehicle in one of the empty parking spaces. For example, the user may park the target vehicle in any one of the empty parking spaces A2214, A2217, A2315, and A2317 in FIG. 1.

For example, a parking interface may be displayed on a display device of the target vehicle after it is detected that the target vehicle enters the parking lot, or after it is detected that a gear of the vehicle is switched to an R (Reverse, reverse) gear, or after a reversing indication triggered by the user is received. The display device may include a plurality of devices such as a central display screen and an HUD (Head-Up Display, head-up display device). This is not limited in this application.

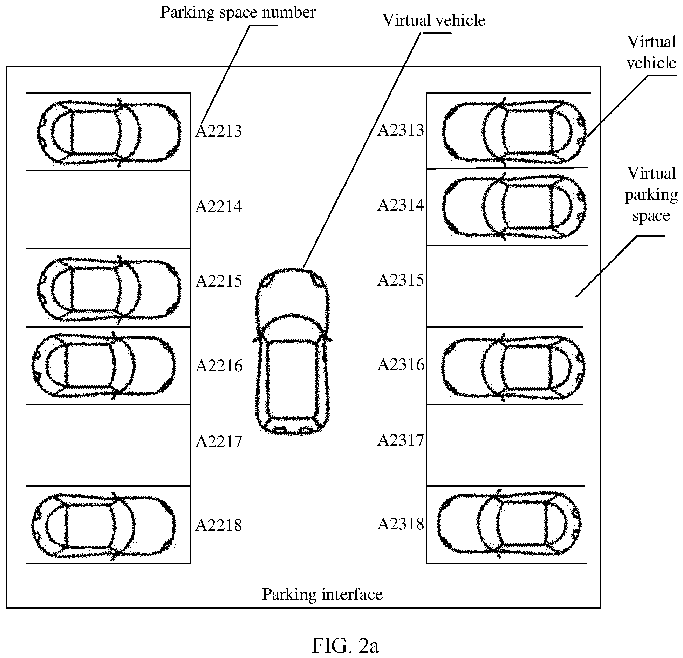

FIG. 2a is a diagram of an example parking interface.

As shown in FIG. 2a, for example, the parking interface may include virtual vehicles and virtual parking spaces. The virtual vehicles may include a virtual vehicle corresponding to a target vehicle and a virtual vehicle corresponding to another vehicle. The virtual parking spaces may indicate an actual parking space (namely, an empty parking space) available for parking the target vehicle. In addition, the parking interface may further include a parking space number of the actual parking space indicated by the virtual parking space, and the like. This is not limited in this application. It should be understood that FIG. 2a shows only an example parking interface, and the parking interface may further display other information such as a virtual obstacle (a virtual obstacle indication, or an actual obstacle (for example, a wall, a pillar, a pedestrian, or an animal in a parking lot) near the target vehicle). This may be specifically determined according to a requirement. This is not limited in this application.

For example, UI (User Interface, user interface) elements, such as the virtual vehicle, the virtual parking space, and the virtual obstacle, displayed on the parking interface may be 2D (2-dimensions, two-dimensional) UI elements or 3D (3-dimensions, two-dimensional) UI elements. This is not limited in this application.

For example, when the parking interface displays 2D UI elements, the target vehicle may obtain sensing information collected by an in-vehicle sensor (for example, an in-vehicle camera or an in-vehicle radar), and then determine a location of the target vehicle, a location of the actual parking space, a location of the another vehicle, and a location of the actual obstacle near the target vehicle based on the sensing information. Then a display location, on the parking interface, of the virtual vehicle corresponding to the target vehicle may be determined based on the location of the target vehicle, and the virtual vehicle is displayed on the parking interface based on the display location of the virtual vehicle on the parking interface. A display location, on the parking interface, of the virtual vehicle corresponding to the another vehicle may be determined based on the location of the another vehicle, and the virtual vehicle is displayed on the parking interface based on the display location of the virtual vehicle on the parking interface. In addition, a display location, on the parking interface, of a virtual obstacle corresponding to the actual obstacle near the target vehicle is determined based on the location of the actual obstacle, and the virtual obstacle is displayed on the parking interface based on the display location of the virtual obstacle on the parking interface.

For example, when the parking interface displays 3D UI elements, the target vehicle may obtain sensing information collected by an in-vehicle sensor (for example, an in-vehicle camera or an in-vehicle radar), and then construct a 3D parking scenario based on the sensing information. The 3D parking scenario may include a 3D virtual vehicle, a 3D virtual parking space, a 3D virtual obstacle, and the like.

In a possible manner, a user may perform a virtual parking space selection operation on the parking interface to select an actual parking space for parking the target vehicle. After the user performs the virtual parking space selection operation, the target vehicle may receive an indication indicating that a virtual parking space is selected, and then display a virtual parking path and a virtual passable area on the parking interface in response to the indication indicating that the virtual vehicle is selected. The virtual parking path and the virtual vehicle are located in the virtual passable area. For example, the virtual parking path indicates an actual parking path between the target vehicle and an actual parking space, and is used to guide the user for parking. For example, the virtual passable area indicates an actual passable area, and a vehicle body of the target vehicle is located in the actual passable area. In this way, in a process in which the user controls parking of the target vehicle, the user can be prompted to prevent collision between the vehicle body (including a vehicle front and a vehicle rear) of the target vehicle and an obstacle, to improve safety of parking. A manner of generating the actual parking path and the actual passable area is described in subsequent embodiments.

In a possible manner, a parking system of the target vehicle may select a virtual parking space from a plurality of virtual parking spaces, to select an actual parking space for parking the target vehicle. After selecting the virtual parking space, the parking system may generate an indication indicating that the virtual parking space is selected, and send, to a human-computer interaction system, the indication indicating that the virtual parking space is selected. The human-computer interaction system displays a virtual parking path and a virtual passable area on the parking interface in response to the indication indicating that the virtual parking space is selected.

In a possible manner, when there is no planned parking space in a parking environment, the target vehicle cannot recognize an actual parking space. In this case, the parking interface cannot display a virtual parking space, but displays an entire parking area. In this case, the user may perform, on the parking interface, an operation of recognizing a virtual parking space from the entire parking area, to identify a corresponding actual parking space for parking the target vehicle. After the user performs the operation of recognizing the virtual parking space from the entire parking area, the target vehicle may receive an indication indicating that the virtual parking space is selected, and then display a virtual parking path and a virtual passable area on the parking interface in response to the indication indicating that the virtual parking space is selected.

For example, the actual passable area may be an area in which the vehicle body of the target vehicle does not collide with an obstacle. To be specific, when the vehicle body of the target vehicle is located in the actual passable area, the vehicle body of the target vehicle does not collide with the obstacle.

For example, the virtual passable area may be displayed in a plurality of forms. For example, a contour line of the virtual passable area may be displayed in an eye-catching color (for example, yellow, green, or red). For another example, a contour line of the virtual passable area is displayed in bold. For still another example, the entire virtual passable area is displayed in an eye-catching color. For yet another example, the virtual passable area is displayed with a contour line and text such as "Passable area". This is not limited in this application.

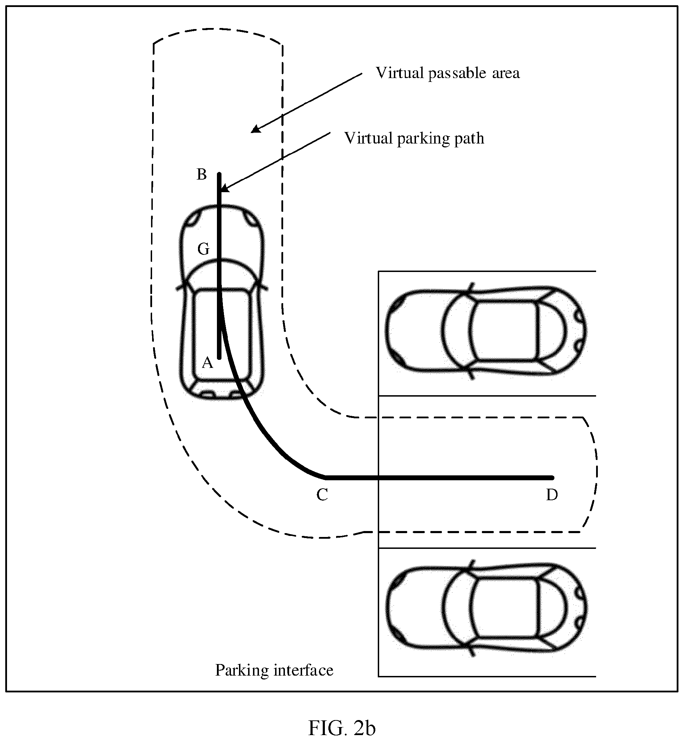

FIG. 2b is a diagram of an example parking interface.

It is assumed that a selected virtual parking space is a virtual parking space A2317 in FIG. 2a. In this case, the parking system may plan an actual parking path from a current location (for example, a point A) of the target vehicle to the actual parking space A2317, and display a corresponding virtual parking path on the parking interface, as indicated by A→B→G→C→D in FIG. 2b. A is a start point of the virtual parking path, and D is an end point of the virtual parking path.

As shown in FIG. 2b, for example, a contour line of a virtual passable area is indicated by a dashed line, and the virtual passable area is an area corresponding to a dashed-line box in FIG. 2b.

For example, when the target vehicle is on the actual parking path, the vehicle body of the target vehicle is located in an actual passable area. Correspondingly, a virtual vehicle on the parking interface is located in the virtual passable area. In this way, in a process in which the target vehicle moves along the actual parking path, the vehicle body of the target vehicle may remain in the actual passable area, without colliding with an obstacle.

It should be noted that the actual parking path may include a plurality of path points, and that the target vehicle is on the actual parking path may mean that a center of the target vehicle overlaps any path point on the actual parking path (the overlapping path point may be referred to as a first path point) and an angle between a longitudinal central axis of the target vehicle and a tangent line of the first path point on the actual parking path is less than a preset angle threshold. A center of the vehicle body, a center of a rear axle, or a center of a front axle of the target vehicle may be considered as a center of the target vehicle. This is not limited in this application. The preset angle threshold may be set according to a requirement. This is not limited in this application.

For example, the virtual passable area may be a 2D area or a 3D area (in this case, a height of the virtual passable area is greater than a height of the target vehicle).

It should be understood that, when the parking interface further includes other UI elements, the other UI elements may be 2D UI elements or 3D UI elements. This is not limited in this application.

For example, parking action prompt information corresponding to the actual parking path may be further displayed on the parking interface, and the parking action prompt information may be used to guide the user for controlling the vehicle. For example, the parking action prompt information includes at least one of the following: gear prompt information, steering-wheel turning prompt information, and speed prompt information. The gear prompt information is used to indicate the user to control a gear of the target vehicle. The steering-wheel turning prompt information is used to indicate the user to control a steering wheel of the target vehicle. The speed prompt information is used to indicate the user to control a speed of the target vehicle.

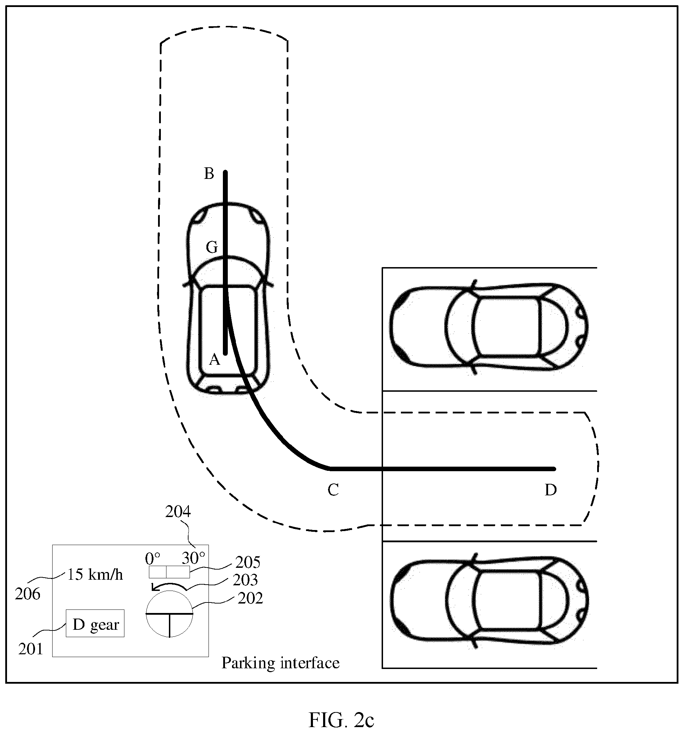

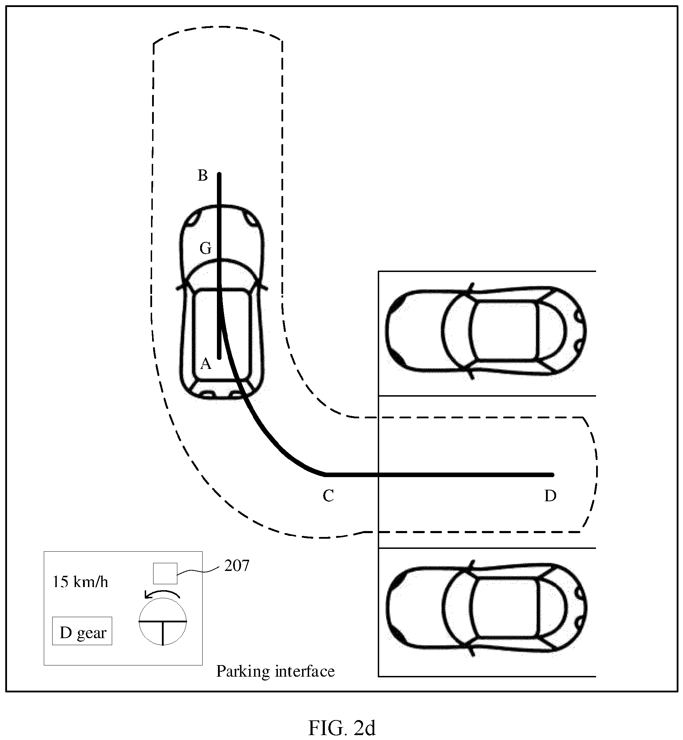

FIG. 2c and FIG. 2d are diagrams of example parking interfaces.

For example, the gear prompt information may include a gear icon, as indicated by 201 in FIG. 2c. In this way, the user determines, based on the gear icon displayed on the parking interface, a gear to which a gear of the target vehicle currently needs to be switched. For example, based on 201 in FIG. 2c, the user determines that the gear of the target vehicle needs to be switched to a D gear.

For example, the steering-wheel turning prompt information may include a steering wheel icon (as indicated by 202 in FIG. 2c), a turning direction icon (as indicated by 203 in FIG. 2c), a target turning angle (as indicated by 204 in FIG. 2c), and a turning angle progress indication icon (as indicated by 205 in FIG. 2c or 207 in FIG. 2d). The turning direction icon indicates a direction in which the user needs to turn the steering wheel. The target turning angle indicates an angle by which the user needs to turn the steering wheel. The progress indication icon indicates a numerical relationship between a current turning angle of the steering wheel and the target turning angle. The current turning angle is an angle by which the user turns the steering wheel after the turning direction icon is displayed. The progress indication icon may indicate a relationship between an angle by which the user has turned the steering wheel and the target turning angle. For example, the numerical relationship between the current turning angle of the steering wheel and the target turning angle may be a difference between the current turning angle of the steering wheel and the target turning angle, or may be a ratio of the current turning angle of the steering wheel to the target turning angle. This is not limited in this application.

It is assumed that the angle by which the user turns the steering wheel after the turning direction icon is displayed is 10 degrees, and the target turning angle is 30 degrees. In the progress indication icon 205 in FIG. 2c, a gray part indicates the current turning angle of the steering wheel, and a white part indicates the difference between the current turning angle of the steering wheel and the target turning angle. A color corresponding to the progress indication icon 207 in FIG. 2d is green. When the ratio of the current turning angle of the steering wheel to the target turning angle is less than 50%, a color corresponding to the progress indication icon is green. When the ratio of the current turning angle of the steering wheel to the target turning angle is greater than 50% and less than 100%, a color corresponding to the progress indication icon is yellow. When the ratio of the current turning angle of the steering wheel to the target turning angle is 100%, a color corresponding to the progress indication icon is red. When the ratio of the current turning angle of the steering wheel to the target turning angle is greater than 100%, a color corresponding to the progress indication icon is orange. The foregoing two types of progress indication icons are merely used as examples. A specific display form of the progress indication icon is not limited in this application.

For example, the speed prompt information may include speed prompt text, as indicated by 206 in FIG. 2c. In this way, the user can control the speed of the target vehicle based on the speed prompt text on the parking interface.

It should be understood that the gear prompt information, the steering-wheel turning prompt information, and the speed prompt information may alternatively include other information. This is not limited in this application.

It should be understood that the gear prompt information, a turning direction, the target turning angle, and a turning angle progress indication in the steering-wheel turning prompt information, and the speed prompt information may alternatively be played through voice. This is not limited in this application.

For example, when detecting that a parking action corresponding to the parking action prompt information is successfully performed, the parking system may generate an indication indicating that a parking action is successfully performed, and send, to the human-computer interaction system, the indication indicating that the parking action is successfully performed. Then the human-computer interaction system displays control success prompt information in response to the indication indicating that the parking action is successfully performed, to notify the user that the user has successfully performed the parking action corresponding to the parking action prompt information.

For example, in a process in which the target vehicle moves based on the actual parking path, the parking system may detect a distance by which the target vehicle deviates from the actual path. When determining that the distance by which the target vehicle deviates from the actual path is greater than a first threshold and less than a second threshold, the parking system may generate an actual assistance path and a path deviation indication, and send the path deviation indication and the actual assistance path to the human-computer interaction system. Then, in response to the path deviation indication, the human-computer interaction system may display, on the parking interface, a virtual assistance path corresponding to the actual assistance path. The actual assistance path may be used to indicate the target vehicle to return to the actual parking path. The second threshold is greater than the first threshold. The first threshold may be set according to a requirement, for example, set to 30 cm. The second threshold may also be set according to a requirement, for example, set to 50 cm. This is not limited in this application. A manner of generating the actual assistance path is described below.

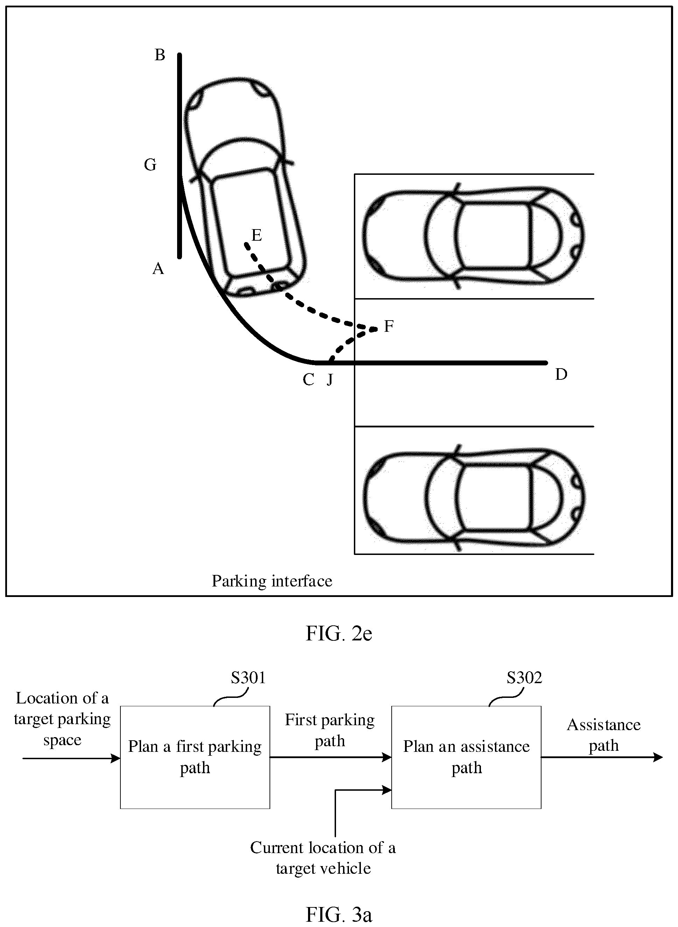

FIG. 2e is a diagram of an example parking interface. For example, for ease of description, an actual parking path corresponding to the virtual parking path A→B→G→C→D in FIG. 2e may be expressed as A'→B'→G'→C'→D'. In this case, the target vehicle may move in an order of A'→B'→G'→C'→D' during parking based on the actual parking path.

As shown in FIG. 2e, for example, in a process in which the target vehicle moves from the actual path point G' corresponding to the virtual parking path point G to the actual path point C' corresponding to the virtual parking path point C, the target vehicle moves to an actual path point E' corresponding to a point E. A distance between the actual path point E' and the actual parking path is 40 cm. In this case, a virtual assistance path that may be generated and that corresponds to an actual assistance path may be indicated by E→F→J in FIG. 2e, where J is also a point on the virtual parking path. In this case, the user may control the target vehicle to return to the actual parking path based on an actual assistance path E'→F'→ J' corresponding to the virtual assistance path E→F→J, and then continue to park the vehicle based on an actual parking path J'→D' corresponding to a virtual parking path J→D.

For example, this application provides a parking path planning method, to generate an actual parking path, an actual assistance path, and an actual passable area. The following describes the parking path planning method in this application by using an example.

FIG. 3a is a diagram of an example path planning process.

S301: Plan a first parking path for a target vehicle based on a location of a target parking space.

For example, in this application, the location of the target vehicle is represented by a location of a center point of a rear axle of the target vehicle. In this application, a current location of the target vehicle may be used as a start point, and a point that is in the target parking space and that corresponds to the center point of the rear axle of the target vehicle (to be specific, a point that is in the target parking space and that corresponds to the center point of the rear axle of the target vehicle when the target vehicle is parked in the target parking space in a case in which it is simulated, based on the location of the target parking space and the current location of the target vehicle, that the target vehicle is successfully packed in the target parking space) may be used as an end point. Then path planning is performed based on a parking environment to obtain the first parking path. The first parking path is an actual parking path.

In a possible manner, path planning may be performed according to a path planning algorithm to obtain the first parking path. The path planning algorithm includes a path search algorithm and a path optimization algorithm. The path search algorithm may be used to search for a rough parking path. The path optimization algorithm may be used to perform path optimization on the rough parking path to obtain the first parking path.

A process of searching for a rough parking path is described below by using an example in which the path search algorithm is a hybrid A* algorithm. (1) A start point (namely, the current location of the target vehicle) and an end point (a location of the point that is in the target parking space and that corresponds to the center point of the rear axle of the target vehicle) for parking, and a location of an obstacle in a parking environment in which the target vehicle is located are obtained. (2) A vehicle motion model is constructed. (3) The start point is added to an extension pool. (4) An optimal point (to be specific, a point with a smallest path cost, where a sum of a cost of a path from the start point to the point and a cost of a path from the point to the end point (the cost of the path may be described by using a distance of the path, traveling time of the path, a quantity of gear changes, or other information) is the smallest) is selected from the extension pool.

Whether a curve that connects the optimal point and the end point, that meets the vehicle motion model, and on which no collision is to occur exists is assessed. If such a curve exists, a rough parking path may be obtained. If no such a curve exists, (5) is performed. (5) Extension is performed based on the selected optimal point (an extension direction may include a forward direction, a backward direction, a leftward direction, and a rightward direction) to obtain a plurality of extension points. (6) A point, among the plurality of extension points, that does not collide with an obstacle is added to the extension pool, and the optimal point selected in (4) is deleted. Then (4) is performed. The foregoing process may be repeated to obtain a rough parking path.

A path optimization process is described below by using an example in which the path optimization algorithm is an OBCA (Optimization-based Collision Avoidance, optimization-based collision avoidance) algorithm. A non-linear programming method may be used to solve, based on a constraint, a target function corresponding to the OBCA algorithm, to optimize the rough parking path to obtain the first parking path. The target function describes a relationship between a plurality of parameters such as a start point and an end point of a vehicle, a control quantity of the vehicle (for example, a steering-wheel turning angle (the steering-wheel turning angle in this application includes an angle by which a steering wheel is turned and a direction in which the steering wheel is turned) or an acceleration of the vehicle), a constraint on the control quantity of the vehicle, a vehicle motion model, locations of the vehicle at different moments, and a change of the control quantity of the vehicle at two adjacent moments. The constraint may include a constraint on distances between the vehicle and M (M is a positive integer) obstacles at a $k^{th}$ (k is a positive integer) moment, a requirement that the vehicle should not collide with each obstacle, and the like. The constraint may be specifically set according to a requirement. This is not limited in this application.

For example, in a process of planning the first parking path, in addition to the first parking path, reference vehicle status information corresponding to the first parking path may be further generated. The reference vehicle status information may include a reference vehicle steering-wheel turning angle, a reference vehicle acceleration, a reference vehicle speed, a reference vehicle gear, and the like. For example, parking action prompt information corresponding to the first parking path may be generated based on current status information (which may include a current vehicle steering-wheel turning angle, a current vehicle acceleration, a current vehicle speed, and a current vehicle gear) of the target vehicle and the reference vehicle status information.

For example, a plurality of path points are generated during path planning of the first parking path, and the first parking path may be obtained by sequentially connecting the plurality of path points. In other words, the first parking path may include a plurality of path points.

The plurality of path points on the first parking path each have corresponding reference vehicle status information. During parking of the target vehicle based on the first parking path, when the target vehicle reaches any path point on the first parking path, if a difference between reference vehicle status information of the path point and current status information of the target vehicle meets a difference condition, the path point may be determined as a target path point. Then the parking action prompt information is generated based on the difference between the reference vehicle status information of the target path point and the current status information of the target vehicle.

For example, the difference condition may include a gear difference condition, a speed difference condition, and a steering-wheel turning angle difference condition. The gear difference condition may be that a gear at a current location of a vehicle is different from a gear at a path point. The speed difference condition may be that a difference between a speed at a current location of a vehicle and a speed at a path point is greater than a speed threshold. The steering-wheel turning angle difference condition may be that a difference between a steering-wheel turning angle at a current location of a vehicle and a steering-wheel turning angle at a corresponding path point is greater than a turning angle threshold. Both the speed threshold and the turning angle threshold may be set according to a requirement. This is not limited in this application.

For example, when a current steering-wheel turning angle of the target vehicle and a reference vehicle steering-wheel turning angle at a path point at which the target vehicle is located meet the steering-wheel turning angle difference condition, steering-wheel turning prompt information may be generated. When a current speed of the target vehicle and a reference speed at a path point at which the target vehicle is located meet the speed difference condition, speed prompt information may be generated. When a current gear of the target vehicle and a reference gear at a path point at which the target vehicle is located meet the gear difference condition, gear prompt information may be generated.

For example, it is assumed that the target vehicle reaches a path point X during parking based on the first parking path, and in reference vehicle status information corresponding to the path point X, a reference vehicle steering-wheel turning angle is 0°, a reference vehicle speed is 15 km/s, and a reference vehicle gear is an R gear. It is assumed that, in current status information of the target vehicle, a reference vehicle steering-wheel turning angle is 30° (rightward), a reference vehicle speed is 10 km/s, and a reference vehicle gear is the R gear. In this case, the generated parking action prompt information may be as follows: Turn left by 30° at a speed of 15 km/s.

For example, to make a parking path and parking action prompt information corresponding to the parking path meet a parking habit of a user, a parking system may capture historical parking data of the user, and then use the historical parking data in path planning of the first parking path. To be specific, the first parking path may be planned for the target vehicle based on the historical parking data and the location of the target parking space.

For example, the historical parking data may include data in a plurality of dimensions, for example, first-dimension data, second-dimension data, third-dimension data, fourth-dimension data, fifth-dimension data, and sixth-dimension data. This is not limited in this application.

For example, the first-dimension data may be used to describe a habit of parking a vehicle by the user in a parking space. For example, the first-dimension data may include a historical parking trajectory and historical vehicle status information in the parking space.

For example, previous $i^{th}$ (i is a positive integer) parking is used as an example. A historical parking trajectory and historical vehicle status information that correspond to the previous $i^{th}$ parking in a historical target parking space (a target parking space selected for each time of previous parking) may be denoted as $(p_i, \varphi_i)$. $p_i$ indicates locations of the target vehicle (for example, a center of a rear axle of the target vehicle) on different longitudinal virtual identification lines/front parking space lines in the corresponding historical target parking space during the previous $i^{th}$ parking. $\varphi_i$ indicates steering-wheel turning angles of the target vehicle on different longitudinal virtual identification lines/front parking space lines in the corresponding historical target parking space during the previous $i^{th}$ parking. $(p_i, \varphi_i) = [(p_0, \varphi_0), (p_1, \varphi_1), ..., (p_k, \varphi_k)]$, where k is a positive integer, and k indicates a quantity of longitudinal virtual identification lines of a parking space.

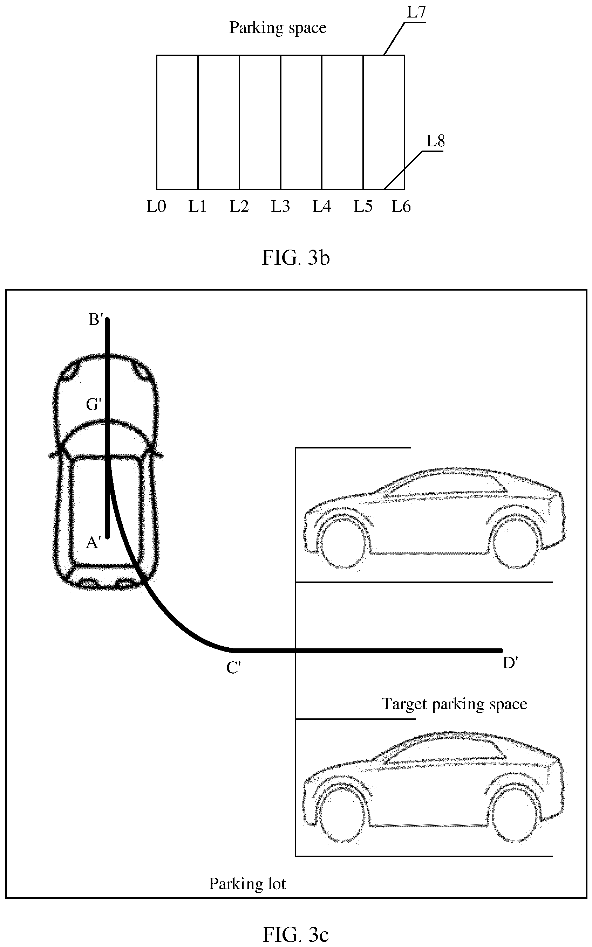

FIG. 3b is a diagram of an example parking space.

For example, a longitudinal virtual identification line of a historical target parking space is a virtual division line that longitudinally divides the historical target parking space into a plurality of areas. As shown in FIG. 3b, the historical target parking space is longitudinally divided into six areas, and L1 to L5 are longitudinal virtual identification lines. In this case, k is 5. L0 is a front parking space line of the historical target parking space. L6 is a rear parking space line of the historical target parking space. L7 is a right parking space line of the historical target parking space. L8 is a left parking space line of the historical target parking space. When a vehicle location is represented by the center of the rear axle of the target vehicle, a distance between the rear parking space line of the historical target parking space and a longitudinal virtual identification line closest to the rear parking space line of the historical target parking space (namely, a distance between L5 and L6) is greater than or equal to a distance between the center of the rear axle of the target vehicle and a vehicle rear of the target vehicle. When a vehicle location is represented by a center of a vehicle body of the target vehicle, a distance between the rear parking space line of the historical target parking space and a longitudinal virtual identification line closest to the rear parking space line of the historical target parking space (namely, a distance between L5 and L6) is greater than or equal to a distance between the center of the vehicle body of the target vehicle and a vehicle rear of the target vehicle. In addition, distances between longitudinal virtual identification lines may be set according to a requirement, and may be the same or different. This is not limited in this application. Distances between longitudinal virtual identification lines in FIG. 3b are the same.

In $(p_0, \varphi_0)$, $p_0$ indicates a location of the target vehicle in a case in which the center of the rear axle of the target vehicle is located on a front parking space line (for example, L0 in FIG. 3b) of a historical target parking space during $i^{th}$ parking, and $\varphi_0$ indicates an orientation angle of the vehicle body relative to the front parking space in a case in which the center of the rear axle of the target vehicle is located on the front parking space line (for example, L0 in FIG. 3b) of the historical target parking space during the $i^{th}$ parking. In $(p_1, \varphi_1)$, $p_1$ indicates a location of the target vehicle in a case in which the center of the rear axle of the target vehicle is located on a first longitudinal virtual identification line (for example, L1 in FIG. 3b) of the historical target parking space during the $i^{th}$ parking, and $\varphi_1$ indicates an orientation angle of the vehicle body relative to the first longitudinal virtual identification line in a case in which the center of the rear axle of the target vehicle is located on the first longitudinal virtual identification line (for example, L1 in FIG. 3b) of the historical target parking space during the $i^{th}$ parking. By analogy, in $(p_k, \varphi_k)$, $p_k$ indicates a location of the target vehicle in a case in which the center of the rear axle of the target vehicle is located on a $k^{th}$ longitudinal virtual identification line (for example, L5 in FIG. 3b) of the historical target parking space during the $i^{th}$ parking, and $\varphi_k$ indicates an orientation angle of the vehicle body relative to the $k^{th}$ longitudinal virtual identification line in a case in which the center of the rear axle of the target vehicle is located on the $k^{th}$ longitudinal virtual identification line (for example, L5 in FIG. 3b) of the historical target parking space during the $i^{th}$ parking.

For example, a historical parking trajectory and historical vehicle status information that correspond to the target vehicle in a historical target parking space may be denoted as $(P, \Phi)$, where $(P, \Phi) = [(P_0, \Phi_0), (P_1, \Phi_1), ..., (P_k, \Phi_k); \sigma_P, \sigma_\Phi]$. In $(P_0, \Phi_0)$, $P_0$ indicates an average value of locations of the target vehicle in a case in which the center of the rear axle of the target vehicle is located on a front parking space line of a corresponding historical target parking space during each time of historical parking, and $\Phi_0$ indicates an average value of orientation angles of the vehicle body relative to a front parking space line of a corresponding historical target parking space in a case in which the center of the rear axle of the target vehicle is located on the front parking space line during each time of historical parking. In $(P_1, \Phi_1)$, $P_1$ indicates an average value of locations of the target vehicle in a case in which the center of the rear axle of the target vehicle is located on a first longitudinal virtual identification line of a corresponding historical target parking space during each time of historical parking, and $\Phi_1$ indicates an average value of orientation angles of the vehicle body relative to a first longitudinal virtual identification line of a corresponding historical target parking space in a case in which the center of the rear axle of the target vehicle is located on the first longitudinal virtual identification line during each time of historical parking. By analogy, in $(P_k, \Phi_k)$, $P_k$ indicates an average value of locations of the target vehicle in a case in which the center of the rear axle of the target vehicle is located on a $k^{th}$ longitudinal virtual identification line of a corresponding historical target parking space during each time of historical parking, and $\Phi_k$ indicates an average value of orientation angles of the vehicle body relative to a $k^{th}$ longitudinal virtual identification line of a corresponding historical target parking space in a case in which the center of the rear axle of the target vehicle is located on the $k^{th}$ longitudinal virtual identification line during each time of historical parking.

For example, a process of calculating $\sigma_P$ may be as follows: For a $j^{th}$ (a value of j ranges from 1 to k) longitudinal virtual identification line, a difference between an average value $P_j$ and a location of the target vehicle in a case in which the center of the rear axle of the target vehicle is located on a $j^{th}$ longitudinal virtual identification line of a corresponding historical target parking space during each time of historical parking may be calculated to obtain a plurality of differences corresponding to the $j^{th}$ longitudinal virtual identification line, and a difference between an average value $P_0$ and a location of the target vehicle in a case in which the center of the rear axle of the target vehicle is located on a front parking space line of a corresponding historical target parking space during each time of historical parking may be calculated to obtain a plurality of differences corresponding to the front parking space line. Then standard deviations between a plurality of differences respectively corresponding to k longitudinal virtual identification lines and the plurality of differences corresponding to the front parking space line may be calculated to obtain $\sigma_P$. For example, a process of calculating $\sigma_\Phi$ may be as follows: For a $j^{th}$ longitudinal virtual identification line, a difference between an average value $\Phi_j$ and an orientation angle of the vehicle body relative to a $j^{th}$ longitudinal virtual identification line of a corresponding historical target parking space in a case in which the center of the rear axle of the target vehicle is located on the $j^{th}$ longitudinal virtual identification line during each time of historical parking may be calculated to obtain a plurality of differences corresponding to the $j^{th}$ longitudinal virtual identification line, and a difference between an average value $\Phi_0$ and an orientation angle of the vehicle body relative to a front parking space line of a corresponding historical target parking space in a case in which the center of the rear axle of the target vehicle is located on the front parking space line during each time of historical parking is calculated to obtain a plurality of differences corresponding to the front parking space line. Then standard deviations between a plurality of differences respectively corresponding to k longitudinal virtual identification lines and the plurality of differences corresponding to the front parking space line may be calculated to obtain $\sigma_\Phi$.

It should be noted that the first-dimension data may alternatively not include $\sigma_P$ or $\sigma_\Phi$. This is not limited in this application.

For example, the second-dimension data may be used to describe a habit of selecting a parking location and angle by the user during parking. For example, the second-dimension data may include a historical parking trajectory and historical vehicle status information outside a parking space. For example, the historical parking trajectory outside the parking space may include a location $W_R$ of the target vehicle relative to a historical target parking space in first reversing of the target vehicle, and a standard deviation $\sigma_w$ of the location of the target vehicle relative to the historical target parking space in the first reversing of the target vehicle; and the historical vehicle status information outside the parking space may include an orientation $\phi_R$ of the target vehicle relative to the historical target parking space in the first reversing of the target vehicle, and a standard deviation $\sigma_\phi$ of the orientation of the target vehicle relative to the historical target parking space in the first reversing of the target vehicle.

For example, a location $W_i$ of the target vehicle relative to a historical target parking space in first reversing of the target vehicle during i$^{th}$ parking may be determined. Then an average value of locations of the target vehicle relative to a historical target parking space in first reversing of the target vehicle during each time of historical parking is calculated to obtain an average location $W_R$ of the target vehicle relative to a historical target parking space in first reversing of the target vehicle. In addition, a standard deviation $\sigma_w$ of a location of the target vehicle relative to a historical target parking space in first reversing of the target vehicle may be calculated based on the average location $W_R$ of the target vehicle relative to the historical target parking space in the first reversing of the target vehicle and the location $W_i$ of the target vehicle relative to the historical target parking space in the first reversing of the target vehicle during each time of historical parking.

For example, an orientation $\phi_i$ of the target vehicle relative to a historical target parking space in first reversing of the target vehicle during i$^{th}$ parking may be determined. Then an average value of orientations of the target vehicle relative to a historical target parking space in first reversing of the target vehicle during each time of historical parking is calculated to obtain an average orientation $\phi_R$ of the target vehicle relative to a historical target parking space in first reversing of the target vehicle. In addition, a standard deviation $\sigma_\phi$ of an orientation of the target vehicle relative to a historical target parking space in first reversing of the target vehicle may be calculated based on the average orientation $\phi_R$ of the target vehicle relative to the historical target parking space in the first reversing of the target vehicle and the orientation $\phi_i$ of the target vehicle relative to the historical target parking space in the first reversing of the target vehicle during each time of historical parking.

It should be noted that the second-dimension data may alternatively not include $\sigma_w$ or $\sigma_\phi$. This is not limited in this application.

For example, the third-dimension data may be used to describe a habit of parking, by the user, a vehicle to the left or the right in a parking space. For example, the third-dimension data may include a ratio $R_d$ of a distance between the target vehicle and a left parking space line of a historical target parking space to a distance between the target vehicle and a right parking space line of the historical target parking space after the target vehicle is successfully parked in the historical target parking space, and a standard deviation $\sigma_d$ of the ratio.

For example, it is assumed that a location of the target vehicle is represented by a distance from the center of the rear axle of the target vehicle. In this case, a ratio $r_i$ of a distance between the center of the rear axle of the target vehicle and a left parking space line of a corresponding historical target parking space to a distance between the center of the rear axle of the target vehicle and a right parking space line of the corresponding historical target parking space may be determined after the target vehicle is successfully parked in the historical target parking space during i$^{th}$ parking. Then an average value of $r_i$ during each time of historical parking may be calculated to obtain a ratio $R_d$ of a distance between the target vehicle and the left parking space line to a distance between the target vehicle and the right parking space line. In addition, a standard deviation $\sigma_d$ of the ratio may be determined based on $r_i$ and $R_d$ during each time of historical parking.

It should be noted that the third-dimension data may alternatively not include $\sigma_d$.

For example, the fourth-dimension data may be used to describe a habit of selecting, by the user, an occasion for turning the steering wheel during reversing of the vehicle. For example, the fourth-dimension data may include frequency $\rho$ at which the user turns the steering wheel in place.

For example, the fifth-dimension data may indicate a historical parking environment. For example, parking environments may be pre-classified into a plurality of types based on parking lot types and/or distribution statuses of obstacles around historical target parking spaces. Each type of parking environment may be used to describe a parking lot type and/or a distribution status of obstacles around a historical target parking space. The parking lot type may include an indoor parking lot, an outdoor parking lot, a home garage, and the like. The distribution status of obstacles around the historical target parking space may include, for example, a vehicle parking status of a parking space around the historical target parking space, and a distribution status of a wall or a pillar around the historical target parking space.

For example, $(P, \Phi)$ corresponding to a specific type of historical parking environment may be determined based on $(p_i, \varphi_i)$ captured in the type of historical parking environment, $W_R$ and $\sigma_w$ that correspond to a specific type of historical parking environment may be determined based on $W_i$ captured in the type of historical parking environment, $\phi_R$ and $\sigma_\phi$ that correspond to a specific type of historical parking environment may be determined based on $\phi_i$ captured in the type of historical parking environment, and $R_d$ and $\sigma_d$ that correspond to a specific type of historical parking environment may be determined based on $r_i$ captured in the type of historical parking environment.

For example, the sixth-dimension data may indicate a historical parking space type. The historical parking space type may include a perpendicular type, a parallel type, an angled type, and the like. Certainly, parking spaces may alternatively be classified in another manner. This is not limited in this application.

For example, $(P, \Phi)$ corresponding to a specific historical parking space type may be determined based on $(p_i, \varphi_i)$ captured when a historical target parking space belongs to the historical parking space type, $W_R$ and $\sigma_w$ that correspond to a specific historical parking space type may be determined based on $W_i$ captured when a historical target parking space belongs to the historical parking space type, $\phi_R$ and $\sigma_\phi$ that correspond to a specific historical parking space type may be determined based on $\phi_i$ captured when a historical target parking space belongs to the historical parking space type, and $R_d$ and $\sigma_d$ that correspond to a specific historical parking space type may be determined based on $r_i$ captured when a historical target parking space belongs to the historical parking space type.

It should be understood that $(P, \Phi)$ corresponding to a case in which a historical target parking space belongs to a specific historical parking space type in a specific type of historical parking environment may be determined based on $(P_i, \varphi_i)$ captured in the historical parking environment when the historical target parking space belongs to the historical parking space type, $W_R$ and $\sigma_w$ that correspond to a case in which a historical target parking space belongs to a specific historical parking space type in a specific type of historical parking environment may be determined based on $W_i$ captured in the historical parking environment when the historical target parking space belongs to the historical parking space type, $\phi_R$ and $\sigma_\phi$ that correspond to a case in which a historical target parking space belongs to a specific historical parking space type in a specific type of historical parking environment may be determined based on $\phi_i$ captured in the historical parking environment when the historical target parking space belongs to the historical parking space type, and $R_d$ and $\sigma_d$ that correspond to a case in which a historical target parking space belongs to a specific historical parking space type in a specific type of historical parking environment may be determined based on $r_i$ captured in the historical parking environment when the historical target parking space belongs to the historical parking space type.

It should be noted that the historical parking data may further include data in other dimensions. This may be specifically set according to a requirement. This is not limited in this application.

For example, a process of using the historical parking data in path planning of the first parking path may be as follows:

For example, during planning of the first parking path, path planning is performed by using a current location of the target vehicle as a start point, using $W_R$ as an end point, and using a vehicle orientation $\phi_R$ corresponding to $W_R$ as a constraint, to obtain a parking path 1. In addition, path planning is performed by using $W_R$ as a start point, using a point determined based on $P_k$ and $R_d$ as an end point, and using a vehicle orientation $\phi_R$ corresponding to $W_R$ as a constraint, to obtain a parking path 2. In addition, a parking path 3 in the target parking space is determined based on $(P_0, \Phi_0), (P_1, \Phi_1), .., (P_k, \Phi_k)$ in $(P, \Phi)$ by using a point determined based on $P_k$ and $R_d$ as an end point. Then whether the target vehicle is to collide with an obstacle when traveling along the parking path 3 is predicted based on a size of the target vehicle. If the target vehicle is to collide with an obstacle when traveling along the parking path 3, the parking path 1 and the parking path 2 are spliced to obtain the first parking path. If the target vehicle is not to collide with an obstacle when traveling along the parking path 3, path planning may be performed by using $W_R$ as a start point, using $P_0$ as an end point, and using a vehicle direction $\phi_R$ corresponding to $W_R$ as a constraint, to obtain a parking path 4. The parking path 1, the parking path 3, and the parking path 4 may be spliced to obtain the first parking path.

For example, in a process of using the point determined based on $P_k$ and $R_d$ as an end point, the point determined based on $P_k$ and $R_d$ may be directly used as an end point; or after the point determined based on $P_k$ and $R_d$ is obtained, a location of the point determined based on $P_k$ and $R_d$ may be offset based on $\sigma_P$ to obtain an end point.

For example, the step of using $W_R$ as a start point may be replaced with using, as a start point, a point obtained by offsetting $\sigma_w$ and $W_R$.

For example, the step of using $W_R$ as an end point may be replaced with using, as an end point, a point obtained by offsetting $\sigma_w$ and $W_R$.

For example, the using a vehicle orientation $\phi_R$ corresponding to $W_R$ as a constraint may be replaced with using, as a constraint, a vehicle orientation obtained by offsetting, by using $\sigma_\phi$, the vehicle orientation $\phi_R$ corresponding to $W_R$.

For example, during planning of the first parking path, a constraint of a planning algorithm may be further added based on the fourth-dimension data $\rho$.

$$\left\| x_v \left( k \right) \right\|^2 \left\| u_\delta \left( k \right) - u_\delta \left( k - 1 \right) \right\|^2 < \varepsilon, \varepsilon > 0$$

$x_v(k)$ indicates a speed of the target vehicle at a moment k, $u_\delta(k)$ indicates a steering-wheel turning angle of the target vehicle at the moment k, and $u_\delta(k - 1)$ indicates a steering-wheel turning angle of the target vehicle at a moment k-1. The constraint requires that a turning angle at a location with a higher speed on a planned path be smaller and a turning angle at a location with a lower speed be larger. $\varepsilon$ is negatively correlated with the dimension $\rho$. To be specific, higher frequency $\rho$ at which the user turns the steering wheel in place corresponds to smaller $\varepsilon$.

It should be noted that a current parking environment of the target vehicle may be further determined, and historical parking data corresponding to a historical parking environment that is the same as the current parking environment is used in path planning of the first parking path. This is similar to the foregoing process, and details are not described herein again. In addition, a current parking space type of the target parking space may be further determined, and historical parking data corresponding to a historical parking space type that is the same as the current parking space type is used in path planning of the first parking path. This is similar to the foregoing process, and details are not described herein again. In addition, a current parking environment of the target vehicle and a current parking space type of the target parking space may be further determined, and then historical parking data corresponding to a historical parking space type that is the same as the current parking space type in a historical parking environment that is the same as the current parking environment is used in path planning of the first parking path. This is similar to the foregoing process, and details are not described herein again.

It should be noted that path planning may be locally performed on the target vehicle to obtain the first parking path; or the target vehicle may send a path planning request to a server, and the server performs path planning to obtain the first parking path, and then returns the first parking path to the target vehicle. This is not limited in this application.

FIG. 3c is a diagram of an example parking path. A first parking path A'→B'→G'→C→D' in FIG. 3c is an actual parking path corresponding to the virtual parking path A→B→G→C→D on the parking interface in FIG. 2b.

S302: Plan an assistance path based on a current location of the target vehicle and the first parking path when a distance by which the target vehicle deviates from the first parking path is greater than a first threshold during movement of the target vehicle based on the first parking path, where the assistance path is used to indicate the target vehicle to return to the first parking path.

For example, after the first parking path is obtained through planning, the user may control the target vehicle to move based on the first parking path for parking. In a process in which the user controls the target vehicle to move based on the first parking path, whether the distance by which the target vehicle deviates from the first parking path is less than the first threshold may be detected. When it is detected that the distance by which the target vehicle deviates from the first parking path is greater than the first threshold, corresponding return action prompt information may be generated. The return action prompt information may be used to indicate the user to control the target vehicle to return to the first parking path. In addition, voice/text prompt information may be generated and played. For example, the following information is played: "You have deviated from the parking path. Please adjust immediately."

For example, when it is detected that the distance by which the target vehicle deviates from the first parking path is greater than the first threshold and less than a second threshold, an assistance path may be planned to assist the user in controlling the target vehicle to return to the first parking path, where the assistance path is the foregoing actual assistance path.

For example, a manner of determining the distance by which the target vehicle deviates from the first parking path may be: drawing a perpendicular line from the current location of the target vehicle to the first parking path, and determining an intersection point between the perpendicular line and the first parking path (or a path point that is on the first parking path and that is closest to the intersection point); and then using a distance between the current location of the target vehicle and the intersection point (or the path point that is on the first parking path and that is closest to the intersection point) to represent the distance by which the target vehicle deviates from the first parking path.

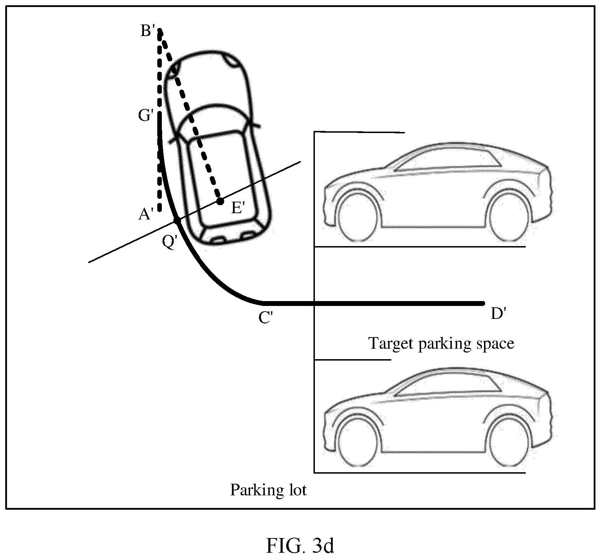

FIG. 3d is a diagram of an example distance. FIG. 3d shows a distance by which the target vehicle deviates from the first parking path.

As shown in FIG. 3d, for example, the current location of the target vehicle is E'. A perpendicular line is drawn from the point E' to the first parking path A'→B'→G'→C'→D', and the perpendicular line intersects with the first parking path at a point Q'. Then a distance between the point E' and the point Q' is calculated, and the distance between the point E' and the point Q' is used as a distance by which the target vehicle deviates from the first parking path.

For example, a target sampling point may be selected from a plurality of sampling points obtained by sampling the first parking path, and path planning is performed by using the current location of the target vehicle as a start point and the target sampling point as an end point, to obtain the assistance path.

For example, the first parking path may be sampled based on a preset step to obtain a plurality of sampling points. The preset step may be set according to a requirement. This is not limited in this application.

In a possible manner, a first candidate sampling point may be determined from the plurality of sampling points, where the first candidate sampling point is a sampling point, on the first parking path, at which a status of the target vehicle is switched; and the target sampling point is selected from the first candidate sampling point. That a status of the target vehicle is switched may mean that a gear of the target vehicle is switched; and/or a steering-wheel turning angle of the target vehicle changes from 0 degrees to another angle or from another angle to 0 degrees; and/or a speed of the target vehicle changes from 0 to another speed or from another speed to 0.

As shown in FIG. 3d, the first candidate sampling point may include the point B' (at which a gear is switched from a D gear to an R gear) and the point C' (at which a steering-wheel angle changes from another angle to 0 degrees) on the first parking path. It should be understood that the first candidate sampling point may further include another sampling point. This is not shown in FIG. 3d.

For example, when there is one first candidate sampling point, the first candidate sampling point may be used as the target sampling point; or when there are a plurality of first candidate sampling points, a sampling point closest to the current location of the target vehicle may be selected from the plurality of first candidate sampling points as the target sampling point. A manner of selecting the target sampling point from the first candidate sampling points is not limited in this application.

In a possible manner, a heuristic model may be pre-trained, and then a trained heuristic model is used to determine a path cost corresponding to each sampling point. A path cost corresponding to each of the plurality of sampling points (which may be referred to as a first sampling point) may be a sum of a path cost corresponding to a path from the current location to the first sampling point and a path cost corresponding to a path from the first sampling point to a last path point on the first parking path. In this way, the target sampling point can be quickly selected, to improve efficiency of planning the assistance path.

For example, a process of training the heuristic model may be as follows: A plurality of groups of training data may be obtained. A group of training data includes a sampling point on a parking path, a deviation point that deviates from the parking path, and a path cost corresponding to each sampling point on the parking path. During planning of the parking path in the training data, a path cost corresponding to each path point on the parking path is determined, and a path cost corresponding to a path point that matches each sampling point may be determined as a path cost corresponding to the sampling point. For a sampling point, a path point that matches the sampling point may be a path point whose location is the same as that of the sampling point. When no path point whose location is the same as that of the sampling point exists, a path point closest to the sampling point is used as a path point that matches the sampling point. Then a sampling point on a parking path and a deviation point that deviates from the parking path in a group of training data may be input to the heuristic model to obtain a path cost that is output by the heuristic model and that corresponds to each sampling point on the parking path. Then a loss function value is calculated based on the path cost that is output by the heuristic model and that corresponds to each sampling point on the parking path, and a path cost corresponding to each path point on the parking path in the group of training data. Then a weight of the heuristic model is adjusted based on the loss function value. In this manner, the heuristic model is trained by using the plurality of groups of training data, until a quantity of times of training meets preset training frequency, or a loss function value meets a preset loss threshold, or effect of a trained heuristic model meets a preset model condition. The preset training frequency, the preset loss threshold, and the preset model condition may all be set according to a requirement. This is not limited in this application.

For example, the current location of the target vehicle and the plurality of sampling points may be input to the trained heuristic model to obtain path costs that are output by the heuristic model and that respectively correspond to the plurality of sampling points, m (m is a positive integer) first candidate sampling points are selected from the plurality of sampling points, and k (k is a positive integer, for example, 3) second candidate sampling points corresponding to smallest path costs are selected from a plurality of sampling points other than the m first candidate sampling points, where the first candidate sampling point is a point at which a status of the target vehicle is switched. Path costs corresponding to the m first candidate sampling points and path costs corresponding to the k second candidate sampling points are determined according to a path planning algorithm, and a sampling point corresponding to a smallest path cost is selected from the m first candidate sampling points and the k second candidate sampling points as the target sampling point. In this way, the target sampling point with the smallest path cost can be selected, so that a path cost of returning from the assistance path to the first parking path and continuing to park the vehicle based on the first parking path is the smallest, and a parking speed can be increased. In addition, a path cost corresponding to each sampling point can be quickly determined by using the trained heuristic model, and then the target sampling point is quickly selected. This improves efficiency of path planning.

In a possible manner, each of the plurality of sampling points is sequentially used as a third candidate sampling point. For a third candidate sampling point, path planning is performed by using the current location of the target vehicle as a start point and the third candidate sampling point as an end point, to obtain a first candidate parking path corresponding to the third candidate sampling point. Then a second candidate parking path corresponding to the third candidate sampling point and a path cost of the second candidate parking path are determined based on the first candidate parking path corresponding to the third candidate sampling point and a path from the third candidate sampling point to a last path point on the first parking path. In this way, a second candidate parking path corresponding to each third candidate sampling point and a path cost of the second candidate parking path can be obtained. Then a third candidate sampling point corresponding to a second candidate parking path with a smallest path cost is selected from a plurality of third candidate sampling points as the target sampling point.

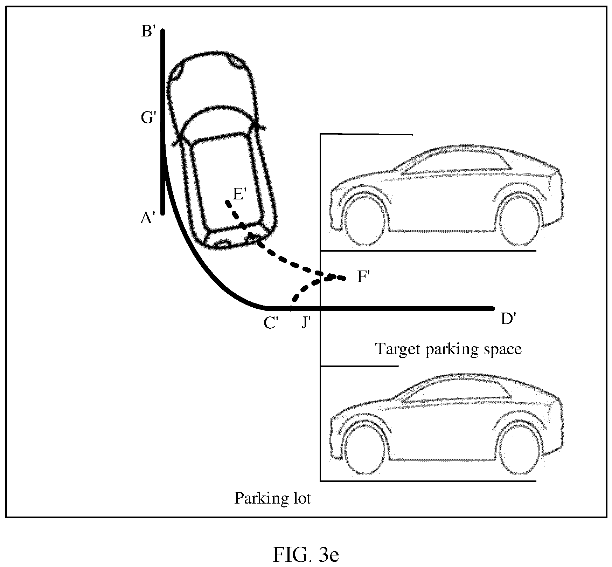

FIG. 3e is a diagram of an example assistance path. An assistance path E'→F'→J' in FIG. 3e is an actual assistance path corresponding to the virtual assistance path E→F→J in FIG. 2e. J' is also a point on the first parking path.

It should be understood that the parking paths shown in FIG. 3c to FIG. 3e are merely example parking paths, and the parking paths are necessarily accurate.

For example, when it is detected that the distance by which the target vehicle deviates from the first parking path is greater than the second threshold, path re-planning may be performed based on the location of the target parking space and the current location of the target vehicle to obtain a second parking path. The second parking path is also an actual parking path. For example, path planning may be performed by using the current location of the target vehicle as a start point and the last path point on the first parking path as an end point, to obtain the second parking path. In this way, a new parking path can be obtained. For details about the path planning, refer to the foregoing process of planning the first parking path. Details are not described herein again.

For example, during planning of the second parking path, in addition to the second parking path, reference vehicle status information corresponding to the second parking path may be further generated. For example, parking action prompt information corresponding to the second parking path may be generated based on current status information of the target vehicle and the reference vehicle status information. This is similar to the foregoing process of generating the parking action prompt information corresponding to the first parking path. Details are not described herein again.

For example, a movement area formed by movement of the target vehicle along the first parking path (and/or the second parking path) may be simulated, and then a contour of the movement area is extended outward to obtain an actual passable area for the target vehicle. The first parking path is used below as an example for description.

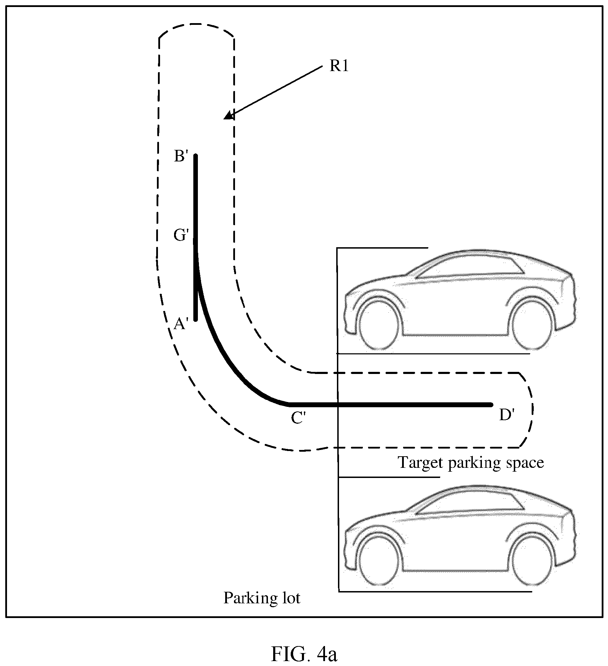

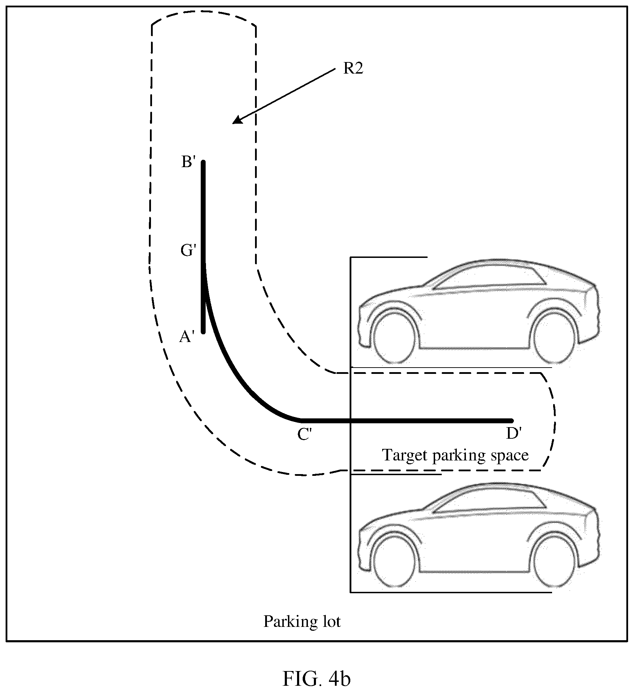

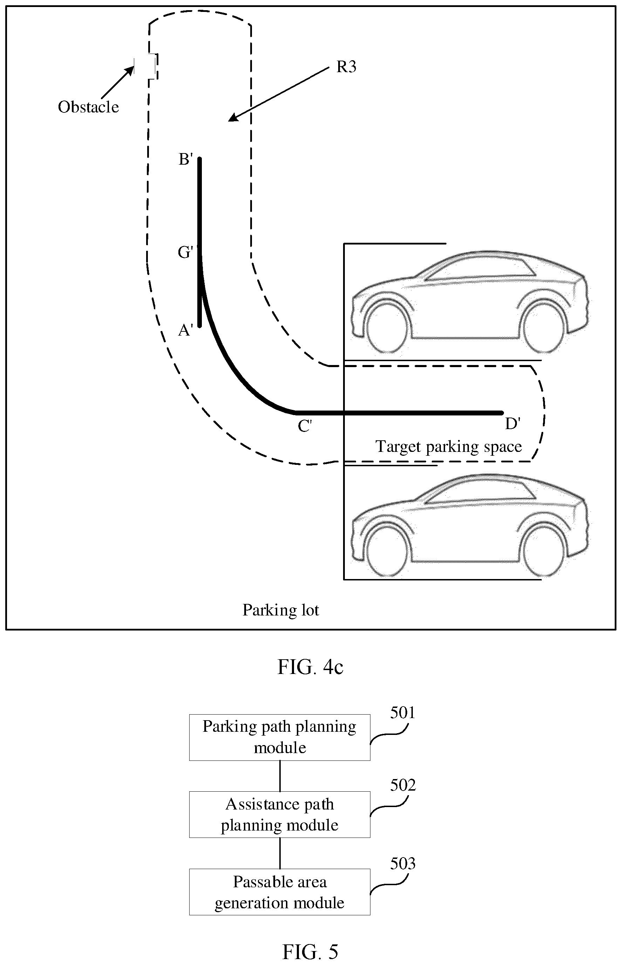

FIG. 4a is a diagram of an example movement area. FIG. 4b and FIG. 4c are diagrams of example passable areas.

First, movement of the target vehicle along the first parking path (A'→B'→G'→C'→D') is simulated based on a vehicle model of the target vehicle, to obtain a closed movement area, as indicated by R1 in FIG. 4a. Then a contour of the movement area is extended outward by a preset distance (the preset distance may be set according to a requirement, for example, set to 30 cm, and this is not limited in this application), to obtain a passable area, as indicated by R2 in FIG. 4b. If an extended contour of the movement area collides with a surrounding obstacle, a contour of an area at which the movement area collides with the obstacle is narrowed until the movement area does not collide with the obstacle (for example, it is required that a distance between the movement area and the obstacle be at least 5 cm), to obtain a passable area, as indicated by R3 in FIG. 4c.

It should be understood that the movement area in FIG. 4a is merely an example, and the movement area is not necessarily accurate. In addition, the passable areas in FIG. 4b and FIG. 4c are merely examples, and the passable areas are necessarily accurate.

For example, there may be a moving obstacle in a parking environment of the target vehicle, and the moving obstacle may prevent the target vehicle from being parked based on a parking path. Therefore, whether the moving obstacle is to hinder parking of the target vehicle may be predicted during parking of the target vehicle based on the first parking path, or during parking of the target vehicle based on the assistance path, or during parking of the target vehicle based on the second parking path. In this application, an example of predicting whether the moving obstacle is to prevent the target vehicle from being parked based on the first parking path is used for description.

For example, during parking based on the first parking path, whether the moving obstacle is to prevent the target vehicle from being parked based on the first parking path may be predicted based on motion information of the moving obstacle. When it is predicted that the moving obstacle is to prevent the target vehicle from being parked based on the first parking path, path re-planning is performed based on the motion information to obtain a third parking path, where the third parking path is also an actual parking path. This can ensure that the target vehicle is successfully parked in the target parking space and ensure safety of parking.

For example, the motion information of the moving obstacle may include a historical motion trajectory, and information that can describe movement of the moving obstacle, such as a speed, an acceleration, and a moving direction that correspond to each trajectory point on the historical motion trajectory. Then a movement area of the moving obstacle within preset duration (the preset duration may be specifically set according to a requirement, for example, set to 3s, and this is not limited in this application) is predicted based on the motion information of the moving obstacle, a category of the moving obstacle (for example, a pedestrian, a scooter and a person riding the scooter, a ball, a cat, or a dog), and a current location of the moving obstacle; and a traveling area of the target vehicle within the preset duration is predicted based on the current location of the target vehicle, the first parking path, and the size of the target vehicle. Then whether a distance between the movement area of the moving obstacle and the traveling area of the target vehicle within the preset duration is greater than a preset distance (the preset distance may be set according to a requirement, and this is not limited in this application) may be determined. A distance between each edge of the movement area of the moving obstacle within the preset duration and each edge of the traveling area of the target vehicle within the preset duration may be calculated, and a smallest distance obtained through calculation is used as a distance between the movement area of the moving obstacle and the traveling area of the target vehicle within the preset duration.

For example, if the distance between the movement area of the moving obstacle and the traveling area of the target vehicle within the preset duration is greater than or equal to the preset distance, it may be determined that the moving obstacle is not to prevent the target vehicle from being parked based on the first parking path. In this case, the target vehicle may continue to be parked based on the first parking path. If the distance between the movement area of the moving obstacle and the traveling area of the target vehicle within the preset duration is less than the preset distance, it may be determined that the moving obstacle is to prevent the target vehicle from being parked based on the first parking path. In this case, path re-planning may be performed by using the current location of the target vehicle as a start point, using the last path point on the first parking path as an end point, and using the motion information of the moving obstacle as a constraint, to obtain the third parking path.

It should be understood that, during parking based on the third parking path, whether the moving obstacle is to prevent the target vehicle from being parked based on the third parking path may also be predicted based on motion information of the moving obstacle. When it is predicted that the moving obstacle is to prevent the target vehicle from being parked based on the third parking path, path re-planning is performed based on the motion information to obtain a new parking path. To be specific, during parking of the target vehicle based on any parking path or assistance path, when it is predicted that the moving obstacle is to prevent the target vehicle from continuing to be parked based on the parking path or the assistance path, path re-planning may be performed to obtain a parking path that does not collide with the moving obstacle, and then the target vehicle continues to be parked based on the new parking path.

FIG. 5 is a diagram of an example electronic device. The electronic device in FIG. 5 may be configured to perform parking path planning, and may be a terminal (for example, a target vehicle) or a server (for example, a cloud server connected to the target vehicle through a network). This is not limited in this application.

As shown in FIG. 5, for example, the electronic device includes:

a parking path planning module 501, configured to plan a first parking path for a target vehicle based on a location of a target parking space; and
an assistance path planning module 502, configured to plan an assistance path based on a current location of the target vehicle and the first parking path when a distance by which the target vehicle deviates from the first parking path is greater than a first threshold during movement of the target vehicle based on the first parking path, where the assistance path is used to indicate the target vehicle to return to the first parking path.

For example, the assistance path planning module 502 is specifically configured to select a target sampling point from a plurality of sampling points obtained by sampling the first parking path, and perform path planning by using the current location of the target vehicle as a start point and the target sampling point as an end point, to obtain the assistance path.

For example, the assistance path planning module 502 is specifically configured to: determine a first candidate sampling point from the plurality of sampling points, where the first candidate sampling point is a sampling point, on the first parking path, at which a status of the target vehicle is switched; and select the target sampling point from the first candidate sampling point.

For example, the assistance path planning module 502 is specifically configured to: input the current location of the target vehicle and the plurality of sampling points to a trained heuristic model, to obtain path costs separately corresponding to the plurality of sampling points output by the heuristic model, where a path cost corresponding to a first sampling point of the plurality of sampling points is a sum of a path cost corresponding to a path from the current location to the first sampling point and a path cost corresponding to a path from the first sampling point to a last path point on the first parking path, and a path point is a point generated during planning of the first parking path; select m first candidate sampling points from the plurality of sampling points, and select k second candidate sampling points corresponding to smallest path costs from a plurality of sampling points other than the m first candidate sampling points, where the first candidate sampling point is a point at which a status of the target vehicle is switched; determine, according to a path planning algorithm, path costs corresponding to the m first candidate sampling points and path costs corresponding to the k second candidate sampling points; and select, from the m first candidate sampling points and the k second candidate sampling points, a sampling point corresponding to a smallest path cost as the target sampling point.

For example, the parking path planning module 501 is specifically configured to: obtain historical parking data of a user, where the historical parking data includes a historical parking trajectory, a historical parking action, a historical parking space type, and a historical parking environment; and plan the first parking path for the target vehicle based on the historical parking data and the location of the target parking space.

For example, the electronic device further includes:

a passable area generation module 503, configured to simulate a movement area formed by movement of the target vehicle along the first parking path, and extend a contour of the movement area outward to obtain an actual passable area for the target vehicle.

For example, the parking path planning module 501 is specifically configured to plan the assistance path based on the current location of the target vehicle and the first parking path when the distance by which the target vehicle deviates from the first parking path is greater than the first threshold and less than a second threshold during movement of the target vehicle based on the first parking path, where the second threshold is greater than the first threshold; and

the parking path planning module 501 is further configured to perform path re-planning based on the location of the target parking space and the current location of the target vehicle when the distance by which the target vehicle deviates from the first parking path is greater than the second threshold during movement of the target vehicle based on the first parking path, to obtain a second parking path.

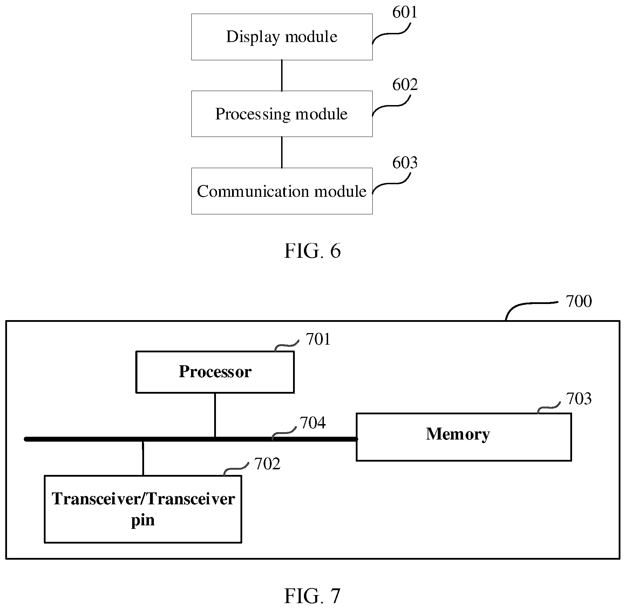

FIG. 6 is a diagram of an example electronic device. The electronic device in FIG. 6 may be configured to display a parking interface, for example, may be a target vehicle.

As shown in FIG. 6, for example, the electronic device may include a display module 601. The display module 601 may be configured to: display a parking interface, where the parking interface includes a virtual vehicle and a virtual parking space, the virtual vehicle indicates a target vehicle, and the virtual parking space indicates an actual parking space available for parking the target vehicle; and display a virtual parking path and a virtual passable area on the parking interface in response to an indication indicating that the virtual parking space is selected, where the virtual parking path indicates an actual parking path between the target vehicle and the actual parking space, the virtual vehicle is located in the virtual passable area, the virtual passable area indicates an actual passable area, and a vehicle body of the target vehicle is located in the actual passable area.

For example, the display module 601 is further configured to display, on the parking interface, parking action prompt information corresponding to the actual parking path, where the parking action prompt information includes at least one of the following: gear prompt information, steering-wheel turning prompt information, and speed prompt information.

For example, the gear prompt information includes a gear icon, the steering-wheel turning prompt information includes a steering wheel icon, and the speed prompt information includes speed prompt text.

For example, the steering-wheel turning prompt information includes a target turning angle and a turning angle progress indication icon, where the progress indication icon indicates a numerical relationship between a current turning angle of a steering wheel and a target turning angle.

For example, the display module 601 is further configured to display success prompt information on the parking interface in response to an indication indicating that a parking action is successfully performed, where the success prompt information indicates that the parking action is successfully performed.

For example, the virtual passable area is a 2D area or a 3D area.

For example, the display module 601 is further configured to display a virtual assistance path in response to a path deviation indication, where the path deviation indication indicates that the target vehicle has deviated from the actual parking path, and the virtual assistance path indicates an actual assistance path for the target vehicle to return to the actual parking path.

For example, the virtual parking path is located in the virtual passable area; and when the target vehicle is on the actual parking path, the vehicle body of the virtual vehicle is located in the virtual passable area.

For example, the electronic device may further include a processing module 602, configured to process data to obtain data that can be displayed by the display module 601.

For example, the electronic device may further include a communication module 603, configured to communicate with another device (for example, a server or another vehicle).

In an example, FIG. 7 is a block diagram of an apparatus 700 according to an embodiment of this application. The apparatus 700 may include a processor 701 and a transceiver or transceiver pin 702, and optionally, further includes a memory 703.

Components of the apparatus 700 are coupled together through a bus 704. In addition to a data bus, the bus 704 further includes a power bus, a control bus, and a status signal bus. However, for clarity of description, various buses are referred to as the bus 704 in the figure.

Optionally, the memory 703 may be configured to store instructions in the foregoing method embodiments. The processor 701 may be configured to execute the instructions in the memory 703, control a receive pin to receive a signal, and control a transmit pin to send a signal.

The apparatus 700 may be the electronic device in the foregoing method embodiments or a chip of the electronic device.

All related content of the steps in the foregoing method embodiments may be cited in function descriptions of corresponding functional modules. Details are not described herein again.

An embodiment further provides a computer-readable storage medium. The computer-readable storage medium stores computer instructions. When the computer instructions are run on an electronic device, the electronic device is enabled to perform the foregoing related method steps to implement the parking path planning method and/or the display method in the foregoing embodiments.

An embodiment further provides a computer program product. When the computer program product is run on a computer, the computer is enabled to perform the foregoing related steps to implement the parking path planning method and/or the display method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the parking path planning method and/or the display method in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect in the corresponding method provided above. Details are not described herein.

Based on the descriptions of the foregoing implementations, a person skilled in the art may understand that, for a purpose of convenient and brief description, division into the foregoing functional modules is merely used as an example for illustration. In actual application, the foregoing functions may be allocated to different functional modules and implemented according to a requirement. In other words, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, the division into the modules or units is merely logical function division and may be other division in an actual implementation. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may be one or more physical units, may be located in one place, or may be distributed in different places. Some or all of the units may be selected according to actual requirements to achieve objectives of solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment may be combined in any manner. Any combination of the foregoing content falls within the scope of this application.

When the integrated unit is implemented in the form of a software functional unit and sold or used as an independent product, the integrated unit may be stored in a readable storage medium. Based on such an understanding, technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

Methods or algorithm steps described with reference to content disclosed in embodiments of this application may be implemented by hardware, or may be implemented by a processor executing software instructions. The software instructions may include corresponding software modules. The software modules may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC.

A person skilled in the art should be aware that, in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium suitable for transmitting a computer program from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

**Claims**

1. A display method, wherein the method comprises:

   displaying a parking interface, wherein the parking interface comprises a virtual vehicle and a virtual parking space, the virtual vehicle indicates a target vehicle, and the virtual parking space indicates an actual parking space available for parking the target vehicle; and
   displaying a virtual parking path and a virtual passable area on the parking interface in response to an indication indicating that the virtual parking space is selected, wherein the virtual parking path indicates an actual parking path between the target vehicle and the actual parking space, the virtual vehicle is located in the virtual passable area, the virtual passable area indicates an actual passable area, and a vehicle body of the target vehicle is located in the actual passable area.

2. The method according to claim 1, wherein the method further comprises:

   displaying, on the parking interface, parking action prompt information corresponding to the actual parking path, wherein
   the parking action prompt information comprises at least one of the following: gear prompt information, steering-wheel turning prompt information, and speed prompt information.

3. The method according to claim 2, wherein

   the gear prompt information comprises a gear icon;
   the steering-wheel turning prompt information comprises a steering wheel icon; and
   the speed prompt information comprises speed prompt text.

4. The method according to claim 2 or 3, wherein the steering-wheel turning prompt information comprises a target turning angle and a turning angle progress indication icon, wherein the progress indication icon indicates a numerical relationship between a current turning angle of a steering wheel and a target turning angle.

5. The method according to any one of claims 2 to 4, wherein the method further comprises:
   displaying success prompt information on the parking interface in response to an indication indicating that a parking action is successfully performed, wherein the success prompt information indicates that the parking action is successfully performed.

6. The method according to any one of claims 1 to 5, wherein
   the virtual passable area is a 2D area or a 3D area.

7. The method according to any one of claims 1 to 6, wherein the method further comprises:
   displaying a virtual assistance path in response to a path deviation indication, wherein the path deviation indication indicates that the target vehicle has deviated from the actual parking path, and the virtual assistance path indicates an actual assistance path for the target vehicle to return to the actual parking path.

8. The method according to any one of claims 1 to 7, wherein

   the virtual parking path is located in the virtual passable area; and

when the target vehicle is on the actual parking path, the vehicle body of the virtual vehicle is located in the virtual passable area.

9. A parking path planning method, wherein the method comprises:

planning a first parking path for a target vehicle based on a location of a target parking space; and
planning an assistance path based on a current location of the target vehicle and the first parking path when a distance by which the target vehicle deviates from the first parking path is greater than a first threshold during movement of the target vehicle based on the first parking path, wherein the assistance path is used to indicate the target vehicle to return to the first parking path.

10. The method according to claim 9, wherein the planning an assistance path based on a current location of the target vehicle and the first parking path comprises:

selecting a target sampling point from a plurality of sampling points obtained by sampling the first parking path; and
performing path planning by using the current location of the target vehicle as a start point and the target sampling point as an end point, to obtain the assistance path.

11. The method according to claim 10, wherein the selecting a target sampling point from a plurality of sampling points obtained by sampling the first parking path comprises:

determining a first candidate sampling point from the plurality of sampling points, wherein the first candidate sampling point is a sampling point, on the first parking path, at which a status of the target vehicle is switched; and
selecting the target sampling point from the first candidate sampling point.

12. The method according to claim 10, wherein the selecting a target sampling point from a plurality of sampling points obtained by sampling the first parking path comprises:

inputting the current location of the target vehicle and the plurality of sampling points to a trained heuristic model, to obtain path costs separately corresponding to the plurality of sampling points output by the heuristic model, wherein a path cost corresponding to a first sampling point of the plurality of sampling points is a sum of a path cost corresponding to a path from the current location to the first sampling point and a path cost corresponding to a path from the first sampling point to a last path point on the first parking path, and a path point is a point generated during planning of the first parking path;
selecting m first candidate sampling points from the plurality of sampling points, and selecting k second candidate sampling points corresponding to smallest path costs from a plurality of sampling points other than the m first candidate sampling points, wherein the first candidate sampling point is a point at which a status of the target vehicle is switched;
determining, according to a path planning algorithm, path costs corresponding to the m first candidate sampling points and path costs corresponding to the k second candidate sampling points; and
selecting, from the m first candidate sampling points and the k second candidate sampling points, a sampling point corresponding to a smallest path cost as the target sampling point.

13. The method according to any one of claims 9 to 12, wherein the planning a first parking path for a target vehicle based on a location of a target parking space comprises:

obtaining historical parking data of a user, wherein the historical parking data comprises a historical parking trajectory, a historical parking action, a historical parking space type, and a historical parking environment; and
planning the first parking path for the target vehicle based on the historical parking data and the location of the target parking space.

14. The method according to any one of claims 9 to 13, wherein the method further comprises:

simulating a movement area formed by movement of the target vehicle along the first parking path; and
extending a contour of the movement area outward to obtain an actual passable area for the target vehicle.

15. The method according to any one of claims 9 to 14, wherein
the planning an assistance path based on a current location of the target vehicle and the first parking path when a distance by which the target vehicle deviates from the first parking path is greater than a first threshold during movement of the target vehicle based on the first parking path comprises:

planning the assistance path based on the current location of the target vehicle and the first parking path when the distance by which the target vehicle deviates from the first parking path is greater than the first threshold and less than a second threshold during movement of the target vehicle based on the first parking path, wherein the second threshold is greater than the first threshold; and

the method further comprises:

performing path re-planning based on the location of the target parking space and the current location of the target vehicle when the distance by which the target vehicle deviates from the first parking path is greater than the second threshold during movement of the target vehicle based on the first parking path, to obtain a second parking path.

16. An electronic device, comprising:

a memory and a processor, wherein the memory is coupled to the processor, wherein the memory stores program instructions, and when the program instructions are executed by the processor, the electronic device is enabled to perform the display method according to any one of claims 1 to 8.

17. An electronic device, comprising:

a memory and a processor, wherein the memory is coupled to the processor, wherein the memory stores program instructions, and when the program instructions are executed by the processor, the electronic device is enabled to perform the parking path planning method according to any one of claims 9 to 15.

18. A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform the display method according to any one of claims 1 to 8.

19. A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform the parking path planning method according to any one of claims 9 to 15.

20. A computer-readable storage medium, wherein the computer-readable storage medium stores a computer program, and when the computer program is run on a computer or a processor, the computer or the processor is enabled to perform the method according to any one of claims 1 to 15.

21. A computer program product, wherein the computer program product comprises a software program, and when the software program is executed by a computer or a processor, the steps of the method according to any one of claims 1 to 15 are performed.

A2213

A2214

A2215

A2216

A2217

A2218

Target vehicle

A2313

A2314

A2315

A2316

A2317

A2318

Parking lot

FIG. 1

Parking space number    Virtual vehicle

Virtual
vehicle

A2213          A2313

A2214          A2314

Virtual
parking
space

A2215          A2315

A2216          A2316

A2217          A2317

A2218          A2318

Parking interface

FIG. 2a

Virtual passable area

Virtual parking path

B

G

A

C

D

Parking interface

FIG. 2b

FIG. 2c

FIG. 2d

B

G

A

E

F

C J

D

Parking interface

FIG. 2e

S301

S302

Location of a target parking space

Plan a first parking path

First parking path

Plan an assistance path

Assistance path

Current location of a target vehicle

FIG. 3a

FIG. 3b

FIG. 3c

FIG. 3d

FIG. 3e

FIG. 4a

FIG. 4b

FIG. 4c

FIG. 5

| |
|---|
| Display module | 601
| Processing module | 602
| Communication module | 603

FIG. 6

700

| |
|---|
| Processor | 701
| | 704
| Memory | 703
| | 702
| Transceiver/Transceiver pin |

FIG. 7

<table>
<tr><td colspan="2">**INTERNATIONAL SEARCH REPORT**</td><td colspan="2">International application No.<br>**PCT/CN2023/082475**</td></tr>
</table>

**A.    CLASSIFICATION OF SUBJECT MATTER**

G01C 21/34(2006.01)i;  G01C 21/00(2006.01)i;  B60W 30/06(2006.01)i;  B60W 30/08(2012.01)i;  B60W 30/095(2012.01)i;  B60W 50/00(2006.01)i;  B60W 50/14(2020.01)i

According to International Patent Classification (IPC) or to both national classification and IPC

**B.    FIELDS SEARCHED**

Minimum documentation searched (classification system followed by classification symbols)

IPC: G01C B60W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 泊车, 界面, 显示, 路径, 轨迹, 车位, 倒车, 影像, 可通行, 区域, 空间, 扩张, display, path, route, park+, image, video

**C.    DOCUMENTS CONSIDERED TO BE RELEVANT**

| Category* | Citation of document, with indication, where appropriate, of the relevant passages | Relevant to claim No. |
|---|---|---|
| X | CN 113460033 A (HUAWEI TECHNOLOGIES CO., LTD.) 01 October 2021 (2021-10-01)<br>description, paragraphs [0112]-[0293], and figures 1-23 | 9, 13, 17, 19-21 |
| Y | CN 113460033 A (HUAWEI TECHNOLOGIES CO., LTD.) 01 October 2021 (2021-10-01)<br>description, paragraphs [0112]-[0293], and figures 1-23 | 1-8, 10-21 |
| Y | CN 107808549 A (HUAWEI TECHNOLOGIES CO., LTD.) 16 March 2018 (2018-03-16)<br>description, paragraphs [0080]-[0157], and figures 3-A | 1-8, 14-21 |
| Y | CN 113650605 A (EVERGRANDE NEW ENERGY AUTOMOBILE INVESTMENT<br>HOLDING GROUP CO., LTD.) 16 November 2021 (2021-11-16)<br>description, paragraphs [0104]-[0120] | 10-15, 17, 19-21 |
| A | CN 113985871 A (SHANGHAI O-FILM INTELLIGENT AUTO UNION TECHNOLOGY<br>CO., LTD.) 28 January 2022 (2022-01-28)<br>entire document | 1-21 |
| A | JP 2014065342 A (AISIN SEIKI CO., LTD.) 17 April 2014 (2014-04-17)<br>entire document | 1-21 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 May 2023** | **10 June 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/082475**

| Patent document cited in search report | | | Publication date (day/month/year) | Patent family member(s) | | | Publication date (day/month/year) |
|---|---|---|---|---|---|---|---|
| CN | 113460033 | A | 01 October 2021 | None | | | |
| CN | 107808549 | A | 16 March 2018 | None | | | |
| CN | 113650605 | A | 16 November 2021 | None | | | |
| CN | 113985871 | A | 28 January 2022 | None | | | |
| JP | 2014065342 | A | 17 April 2014 | JP | 5991112 | B2 | 14 September 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210302356